(19) Europäisches Patentamt
European Patent Office
Office européen des brevets

(11) **EP 3 835 639 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **20211216.5**

(22) Anmeldetag: **02.12.2020**

(51) Internationale Patentklassifikation (IPC):
**F16L 9/10** (2006.01)       **F16L 9/18** (2006.01)
**F16L 53/37** (2018.01)      **F16L 53/38** (2018.01)

(52) Gemeinsame Patentklassifikation (CPC):
**B32B 18/00; F16L 9/10; F16L 9/18; F16L 53/37; F16L 53/38;** C04B 2235/5224; C04B 2235/5228; C04B 2235/5236; C04B 2235/5244; C04B 2235/5248; C04B 2235/9607; C04B 2237/343; C04B 2237/348; C04B 2237/38; C04B 2237/64;       (Forts.)

(54) **GASDICHTES, WÄRMEDURCHLÄSSIGES, KERAMISCHES UND MEHRLAGIGES VERBUNDROHR**

GAS-TIGHT, HEAT PERMEABLE, CERAMIC AND MULTILAYER COMPOSITE PIPE

TUBE COMPOSITE MULTICOUCHE ET CÉRAMIQUE, DIATHERMANE, ÉTANCHE AU GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2019   EP 19215608**

(43) Veröffentlichungstag der Anmeldung:
**16.06.2021   Patentblatt 2021/24**

(73) Patentinhaber: **BASF SE**
**67056 Ludwigshafen am Rhein (DE)**

(72) Erfinder:
• **Kolios, Grigorios**
  **67056 Ludwigshafen am Rhein (DE)**
• **Laib, Heinrich**
  **67117 Limburgerhof (DE)**
• **Scheiff, Frederik**
  **67056 Ludwigshafen am Rhein (DE)**
• **Zoels, Bernd**
  **67056 Ludwigshafen am Rhein (DE)**
• **Kern, Matthias**
  **67056 Ludwigshafen am Rhein (DE)**

(74) Vertreter: **BASF IP Association**
**BASF SE**
**GBI-C006**
**67056 Ludwigshafen (DE)**

(56) Entgegenhaltungen:
**EP-B1- 1 972 853          WO-A1-2016/184776
WO-A1-2017/063911       DE-A1- 4 306 896
DE-C1- 3 533 385           JP-A- H05 223 194
US-A- 3 105 136**

(52) Gemeinsame Patentklassifikation (CPC): (Forts.)
C04B 2237/765; C04B 2237/84

**Beschreibung**

Die vorliegende Erfindung betrifft ein gasdichtes mehrlagiges Verbundrohr oder Bereiche eines mehrlagigen Verbundrohres mit einem Wärmedurchgangskoeffizient von > 500 W/m²/K beinhaltend mindestens zwei Lagen, welches in seinem Aufbau über den Querschnitt der Wand des Verbundrohres als innere Lage eine nicht offen poröse monolithische Oxid-Keramik aufweist, welche von einer äußeren Lage aus oxidischer Faserverbundkeramik umschlossen wird, wobei diese äußere Lage eine offene Porosität ε (im Sinne von DIN EN 623-2) von größer als 5% und kleiner als 50%, bevorzugt größer als 10% und kleiner als 30% aufweist und wobei in dem äu-ßeren Ringraum des mehrlagigen Verbundrohres, dessen Begrenzungen definiert sind durch einerseits die äußere Mantelfläche der inneren Lage, die aus der nicht offenen porösen monolithischen Oxid-Keramik gebildet wird und andererseits durch die äußere Mantelfläche der äußeren Lage, die aus einer oxidischen Faserverbundkeramik gebildet wird, ein elektrisch leitfähiges System integriert ist.

Endotherme Reaktionen stehen häufig am Anfang der Wertschöpfungskette der chemischen Industrie, beispielsweise bei der thermischen Spaltung von Ethan, Propan, Butan, Naphtha und schwersiedenderen Erdölfraktionen, der Reformierung von Erdgas, der Dehydrierung von Propan, der Dehydroaromatisierung von Methan zu Benzol oder der Pyrolyse von Kohlenwasserstoffen. Diese Reaktionen sind stark endotherm und laufen bei hohen Temperaturen ab, d.h. Temperaturen zwischen 500°C und 1700°C sind erforderlich, um technisch und wirtschaftlich interessante Ausbeuten zu erreichen.

Zum Beispiel enthält die thermische Spaltung von Kohlenwasserstoffen, dem sogenannten Steamcracking oder Dampfspalten, parallele endotherme Crack- und Dehydrierreaktionen, die bei leichtem Überdruck und hohen Temperaturen durchgeführt werden. Der Standardprozess nach dem Stand der Technik ist das Steamreaforming von Ethan, Propan oder Naphtha (nichthydriertes Rohbenzin) zur Herstellung von Ethylen, Propylen und C4-Olefinen. Diese Produkte zählen zu den mengenmäßig wichtigsten Grundprodukten in der chemischen Industrie. Die Steamcracker gehören zu den Chemieanlagen mit dem größten Stoffdurchsatz. Im Stand der Technik wird dieser stark endotherme Prozess in Rohrschlagen durchgeführt, die von außen durch Feuerung beheizt werden. In einem sogenannten Spaltofen werden mehrere parallel verlaufende Rohre gleichzeitig beheizt und innen von einem Einsatzstoff-Dampf-Gemisch durchströmt. Die Funktion der Rohrwände ist dabei die Übertragung des Wärmestroms von einer externen Wärmequelle in das Reaktionsvolumen und die hermetische Trennung des Reaktionsvolumens von der umgebenden Wärmequelle unter Erhaltung der Druckdifferenz zwischen den zwei Räumen. Die Rohre der Festbettreaktoren sind typischerweise zylindrisch mit variablem oder einheitlichem Durchmesser über die gesamte Rohrlänge. Innerhalb des Ofens können auch verschieden Rohre geteilt oder zusammengeführt werden. Der Werkstoff der Rohre ist typischerweise hochlegierter austenitischer Schleuderguss.

Technische Spaltprozesse werden bei Drücken bis 5 bar Überdruck und Temperaturen bis 1000 °C geführt, wobei dieser Wert die Produktgastemperatur am Austritt der Reaktionsrohre repräsentiert. Der technische Prozess ist vor allem kinetisch limitiert. Der Begriff " kinetisch limitiert" bedeutet, dass die Verweilzeit des Reaktionsgases in den Spaltrohren so kurz ist, dass die Spalt- und Dehydrierreaktionen nicht das thermodynamische Gleichgewicht erreichen.

Bei der Verwendung von metallischen Reaktorwerkstoffen ist die maximale äußere Rohrwandtemperatur auf ca. 1050-1100 °C beschränkt.

Allerdings wäre eine höhere maximale äußere Rohrwandtemperatur (engl. Tube metal temperature, abgekürzt TMT) aus mehreren Gründen wünschenswert: insbesondere um die notwendige Wärme für die Spaltreaktionen trotz Koksablagerungen auf der Rohrinnenseite bereitzustellen. Zum einen führt die Koksablagerung an der heißen Rohrwand führt dazu, dass das die äußere Rohrwandtemperatur im Laufe des Betriebs angehoben werden muss, um die thermische Isolationswirkung des Kokses zu kompensieren. Das führt zu einer höheren Feuerungsleistung und zu einem höheren Energieverbrauch. Zum zweiten führt die Koksablagerung dazu, dass der Ofen beim Erreichen der maximal zulässigen äußeren Rohrwandtemperatur außer Betrieb genommen und durch Abbrennen mit Luft entkokt werden muss.

Rohrwand-Temperaturen von > 1100°C erfordern den Einsatz keramischer Werkstoffe, vorzugsweise von Oxidkeramiken. Die Vorteile von keramischen Werkstoffen, insbesondere Oxidkeramiken, sind hohe Temperaturbeständigkeit bis 1800 °C, chemische Passivität, Korrosionsbeständigkeit und hohe Festigkeit. Der größte Nachteil von keramischen Werkstoffen ist deren hohe Sprödigkeit. Diese Eigenschaft wird über die Bruchzähigkeit $K_{IC}$ beschrieben, die beispielsweise gemäß DIN EN ISO 12737 für Metalle, bzw. gemäß DIN EN ISO 15732 für monolithische Keramiken bestimmt wird. Für Stahl, einem Vertreter zäher Werkstoffe, beträgt $K_{IC} \approx 50 \; MPa \; \sqrt{m}$. Für monolithische Keramiken, beispielsweise Zirkonoxid ($ZrO_2$) oder Korund ($Al_2O_3$) beträgt $K_{IC} \cong 3 - 5 \; MPa \; \sqrt{m}$. Hierdurch sind monolithische Keramiken ungeeignet für Druckapparate mit einem Druck von > 0,5 bar, da diese Werkstoffe das Kriterium "Riss vor Bruch" nicht gewährleisten können, sondern ein plötzlicher, sich nicht ankündigender Bruch stattfinden könnte.

Eine Alternative sind Faserverbundkeramiken bestehend aus oxidischen Fasern, die in einer porösen Matrix aus oxidischer Keramik eingebettet sind. Die offene Porosität ε von Faserverbundkeramiken kann in der Regel Werte zwischen 5% und 50% annehmen. Die Vorteile von Faserverbundkeramiken sind hohe Temperaturbeständigkeit bis 1300 °C oder darüber, hohe Temperaturwechselbeständigkeit und ein quasi-duktiles Verformungs- und Bruchverhalten.

**EP 3 835 639 B1**

Die Bruchzähigkeit von Faserverbundkeramiken kann Werte erreichen von $K_{IC} \cong 10 - 50\ MPa\ \sqrt{m}$. Als Folge der porösen Struktur besitzen Faserverbundkeramiken eine geringere Dichte, einen niedrigeren Elastizitätsmodul und einen niedrigeren Wärmeleitfähigkeitskoeffizient gegenüber monolithischen Keramiken mit derselben chemischen Zusammensetzung. Die Tabelle 1 enthält eine Liste der relevanten Normen für die Bestimmung dieser Parameter.

Tabelle 1: Liste der relevanten Normen für die Bestimmung struktureller, mechanischer und thermophysikalischer Parameter für monolithische Keramiken und Verbundkeramiken.

| Parameter | Monolithische Keramik | Faserverbundkeramik |
|---|---|---|
| Dichte, offene Porosität | DIN EN 623-2 | DIN V ENV 1389 |
| E-Modul | DIN V ENV 843-2 | DIN EN 658-1 |
| Bruchzähigkeit' | DIN EN ISO 15732 | Single-edge-notch-bend[2] |
| Temperaturleitfähigkeitskoeffizient | DIN EN 821-2 | DIN V ENV 1159-2 |
| Spezifische Wärmekapazität | DIN EN 821-3 | DIN V ENV 1159-3 |
| [1]: Die Bruchzähigkeit metallischer Werkstoffe wird gemäß DIN EN ISO 12737 bestimmt. [2]: M. Kuntz. Risswiderstand keramischer Faserverbundwerkstoffe. Dissertation Universität Karlsruhe, Shaker Verlag, 1996. | | |

Der Wärmeleitfähigkeitskoeffizient ist über die folgende Beziehung definiert: Wärmeleitfähigkeitskoeffizient = Dichte $\times$ (spezifische Wärmekapazität) $\times$ Temperaturleitfähigkeitskoeffizient

Beispielhaft enthält die Tabelle 2 einen Vergleich zwischen den Eigenschaften monolithischer Keramiken und Faserverbundkeramiken auf der Basis von Aluminiumoxid.

Tabelle 2: Gegenüberstellung der physikalischen Eigenschaften von monolithischen Keramiken und Verbundkeramiken.

| Parameter | Monolithische Keramik Friatec Degussit® AL23 | Faserverbundkeramik WHIPOX® N610/45 |
|---|---|---|
| Offene Porosität in % | 0 | 26 |
| Dichte in $\frac{g}{cm^3}$ | 3,8 | 2,9 |
| E-Modul in $GPa$ | 380 | 110 |
| Wärmeleitfähigkeitskoeffizient in $\frac{W}{m \cdot K}$ | 30 (@100°C) 5,5 (@1000°C) | 5,7 (@200°C) 2,7 (@1000°C) |

Der Fertigungsvorgang von Bauteilen aus Faserverbundkeramik wird beispielsweise in DE102016007652A1 beschrieben und umfasst vorteilhafterweise die folgenden Arbeitsschritte: Das textile Gerüst wir mit einem Schlicker getränkt und auf eine Form abgelegt oder laminiert. Unter einem Schlicker im Allgemeinen und im Sinne der Erfindung versteht man das breiige bis zähflüssige Gemisch aus Wasser mineralischem Pulver, das als Rohmasse zur Herstellung keramischer Erzeugnisse genutzt wird. Vorteilhaft enthält das Pulver Metalloxide, Carbide, Nitride. Bevorzugt enthält das Pulver Aluminiumoxid, Zirkonoxid, Mullit oder Zirkonia verstärktes Aluminiumoxid. Anschließend wird das Bauteil getrocknet bei Temperaturen von 70°C bis 120°C. Dadurch erhält das Bauteil eine ausreichende Stabilität, dass es selbsttragend ist und entformt werden kann. Schließlich wir das Bauteil in einem Hochtemperaturofen bei Temperaturen von 1100°C bis 1300°C gesintert. Das fertige Bauteil besteht aus einem innigen Verbund aus dem textilen Gerüst und einer gesinterten, porösen keramischen Matrix.

Nachteilig an der porösen Struktur von Faserverbundkeramiken ist ihre Untauglichkeit für die Herstellung von Druckapparaten mit einem Druck von > 0,5 bar. Ferner ist die niedrigere Wärmeleitfähigkeit im Vergleich zur nicht offen porösen monolithischen Keramik mit derselben chemischen Zusammensetzung nachteilig, d.h. wenn durch eine Lage aus diesem Material ein Wärmestrom übertragen werden soll.

Die WO 2016/184776 A1 offenbart ein mehrlagiges Verbundrohr beinhaltend eine Lage aus nicht offen poröser monolithischer Oxidkeramik und eine Lage aus oxidischer Faserverbundkeramik welches für die Herstellung von Reaktionsrohren einsetzbar ist, welche bei Betriebsdrücken von 1 bis 50 bar und Reaktionstemperaturen bis 1400°C betrieben werden und dabei von einer äußeren Wärmequelle - üblicherweise einer Heizkammer - stark erhitzt werden.

4

Beim Einsatz von Verbundrohren ist es regelmäßig erforderlich diese zu beheizen. Hierzu werden die Rohre üblicherweise entweder von einem Wärmeträgermedium umspült oder durch Strahlungswärme erhizt. Dies ist beispielsweise in (Eigenberger, G., & Ruppel, W. (2000). Catalytic fixed-bed reactors, ullmann's encyclopedia of industrial chemistry. Wiley, London. https.//doi. org/10. 1002/14356, 7, b04_199) beschrieben. Allerdings macht diese Art der Beheizung einen zusätzlichen apparativen Aufwand sowie einen weiteren Prozessgasstrom erforderlich, wodurch die Effektivität des Verfahrens beeinträchtigt wird. Weiterhin besteht insbesondere bei dem Prinzip der Beheizung mittels Strahlungswärme die Gefahr einer unerwünschten lokalen Überhitzung. Zusätzlich wird im Fall der Verbrennung die $CO_2$ Emission erhöht. Außerdem kann ein spezifisches Beheizen des Verbundrohres, bei welchem spezielle Segmente gezielt mit einer bestimmten Temperatur erwärmt werden, wenn überhaupt nur mit deutlich mehr Aufwand realisiert werden.

Weiterhin ist es für eine effektive Verfahrensführung beim Einsatz von Verbundrohren erforderlich, in verfahrenstechnisch einfacher Art und Weise eine effektive Möglichkeit der Messung der Temperatur im Innern des Verbundrohres zu ermöglichen. Hierzu wird bisher üblicherweise ein Multi-Thermoelement längs in der Rohrachse positioniert (DE10011309A1, EP1882518B1). Üblicherweise wird das Thermoelement in einer Schutzhülse geführt. Technische Reaktoren besitzen eine Vielzahl -bis 40000 derartige- Rohre, die parallel angeordnet und von einem gemeinsamen Wärmeträger umgeben sind. Nur wenige Rohre sind mit Thermoelementen ausgestattet. Nachteilig an diesem Stand der Technik ist, dass das Thermoelement und die Schutzhülse einen erheblichen Teil des Rohrquerschnittes versperrt und -sofern vorhanden- die Katalysatorpackung stört. Infolge dessen ist in diesen Rohren die Gasbelastung und der Wärmetransport in diesen Rohren unterschiedlich zu den Rohren, die kein Thermoelement enthalten. Folglich ist das gemessene Temperaturprofil auch nicht repräsentativ für das gesamte Reaktionsvolumen. Die Aufgabe der vorliegenden Erfindung war demnach die Bereitstellung von Reaktionsrohren, die folgendes Eigenschaftsprofil aufweisen: (i) wärme-

$$\text{koeffizient} > 500 \frac{W}{m^2\,K}$$

durchlässig mit einem Wärmedurchgangs- (ii) temperaturbeständig bis > 1100°C, (iii) druckbeständig bis ca. 20 bar bzw. druckbeständig bei Druckdifferenzen bis ca. 20 bar, (iv) korrosionsbeständig gegen reduzierende und gegen oxidierende Atmosphäre mit einem Sauerstoffpartialdruck von $10^{-25}$ bar bis 10 bar (v) temperaturwechselbeständig gemäß DIN EN 993-11 und (vi) chemisch inert gegenüber unerwünschte Ablagerungen, insbesondere inert gegenüber dem durch Metalle wie Eisen und Nickel katalysierten Verkoken an der Innenwand des Reaktionsrohres und (vii) darüber hinaus eine verfahrenstechnisch einfache und effektive Beheizung des Verbundrohres sicherzustellen und (viii) zusätzlich oder alternativ zu Merkmal (vii) eine verfahrenstechnisch einfache Art und Weise der Temperaturmessung im Innern des Verbundrohres zu ermöglichen. Weiterhin soll die Möglichkeit des segmentierten Beheizens eröffnet werden.

Hierbei wird ein mehrlagiges Verbundrohr mit einem Wärmedurchgangskoeffizient von größer als 500 W/m$^2$/K beinhaltend mindestens zwei Lagen, welches in seinem Aufbau über den Querschnitt der Wand des Verbundrohres als innere Lage eine nicht offen poröse monolithische Oxid-Keramik aufweist, welche von einer äußeren Lage aus oxidischer Faserverbundkeramik umschlossen wird und welches eine offene Porosität von 5 % < ε < 50 % aufweist und welches in dem äußeren Ringraum des mehrlagigen Verbundrohres, dessen Begrenzungen definiert sind durch einerseits die äußere Mantelfläche der inneren Lage, die aus der nicht offenen porösen monolithischen Oxid-Keramik gebildet wird und andererseits durch die äußere Mantelfläche der äußeren Lage, die aus einer oxidischen Faserverbundkeramik gebildet wird, ein elektrisch leitfähiges System integriert ist, offenbart.

Unter einem elektrisch leitfähigen System (oder auch elektrisch leitendem System) in Sinne dieser Erfindung wird bevorzugt ein System verstanden, welches über dem Volumen der äußeren Lage des erfindungsgemäßen Verbundrohres eine spezifische elektrische Leitfähigkeit in einem Bereich von 1 kS/m bis 100 MS/m, bevorzugt von 10 kS/m bis 10 MS/m aufweist. Hierbei kann diese spezifische elektrische Leitfähigkeit (Einheit "Siemens pro Meter) sowohl über die Länge des erfindungsgemäßen Verbundrohres als auch über den Radius der äußeren Lage des erfindungsgemäßen Verbundrohres variieren. Die über dem Volumen der äußeren Lage des erfindungsgemäßen Verbundrohres längenbezogene elektrische Leitfähigkeit beträgt 1 S*m bis $10^4$ S*m, bevorzugt 10 S*m bis $10^3$ S*m

Das elektrisch leitfähige System, welches bevorzugt in die oxidische Faserverbundkeramik des erfindungsgemäßen Verbundrohres integriert wird, kann auf unterschiedliche Weisen realisiert werden.

In einer besonders bevorzugten Variante werden in das Gerüst der oxidischen Faserverbundkeramik, welche bevorzugt nach dem Infiltrationsverfahren aus oxidischer Matrix und einem Gewebe, Geflecht oder einer verwandten Textilart als textiles Gerüst hergestellt sind, wobei das textile Gerüst aus oxidischen Fasern mit eingewobenen, eingeflochtenen, eingestrickten oder anderweitig eingearbeiteten Fäden aus einem elektrisch leitendem Material besteht. Hierbei sind diese Fäden bevorzugt refraktär, das bedeutet, dass die Materialien aus denen die Fäden bestehen, bis 2800°C, bevorzugt bis 2000°C, weiter bevorzugt bis 1500°C beständig sind. Bevorzugt bestehen diese elektrisch leitfähigen Fäden aus Metall oder Metalllegierungen und enthalten bevorzugt Eisen, Nickel, Platin, Rhenium, Ruthenium, Titan, Vanadium, Hafnium, Molybdän, Tantal, Niob und / oder Wolfram. Es können auch Kohlefasern oder Siliciumcarbidfasern eingesetzt werden. Eine bevorzugte Struktur von Fäden, welche eingesetzt werden können, wird in Short, D., & Summerscales, J. (1979). Hybrids-a review: Part 1. Techniques, design and construction. Composites, 10(4), 215-222 beschrieben.

In einer anderen, bevorzugten Ausgestaltung enthält die Matrix der oxidischen Faserverbundkeramik Partikeln aus elektrisch leitfähigem Material. Dies können beispielsweise elektrisch leitfähige Materialien auf Keramikbasis wie Elektride sein, darunter versteht man chemische Verbindungen, in denen die negative Ladung nicht als Anion sondern als Elektron vorliegt. Elektride sind z.B. in (Kim, Sung-Wng et al. "Electron carrier generation in a refractory oxide 12CaO.7Al2O3 by heating in reducing atmosphere: Conversion from an insulator to a persistent conductor." Journal of the American Ceramic Society89.10 (2006): 3294-3298) oder in EP1961702A1 offenbart. Es können auch Partikeln auf Basis von Siliciumcarbid oder Kohlenstoff eingebracht werden. Weiterhin können auch Partikeln auf Basis von Metallen oder Metalllegierungen eingebracht werden, beispielsweise auf Basis von Eisen, Nickel, Platin, Rhenium, Ruthenium, Titan, Vanadium, Hafnium, Molybdän, Tantal, Niob und / oder Wolfram.

Vorteilhaft werden die elektrisch leitfähigen Partikeln dem Pulver beigemischt, aus dem der Schlicker präpariert wird, mit dem das textile Gerüst infiltriert wird. Bevorzugte Parameter sind dabei eine Partikelgröße der elektrisch leitfähigen Partikeln von 10nm bis 50$\mu$m, bevorzugt 50nm bis 20$\mu$m, weiter bevorzugt 100nm bis 10$\mu$m und ein Gewichtsanteil von 1% bis 50%, bevorzugt von 2% bis 30%, weiter bevorzugt von 5% bis 20%. Dabei versteht man als Gewichtsanteil das Verhältnis der Masse der elektrisch leitfähigen Partikeln zur Gesamtmasse des Pulvers, das im Schlicker eingesetzt wird.

In einer weiteren Ausgestaltungsform wird die äußere Oberfläche der Lage aus Faserverbundkeramik mit einer elektrisch leitfähigen Schicht beschichtet. Dabei gilt als äußere Oberfläche der Lage aus Faserverbundkeramik die äußere Oberfläche, die durch die äußere Kontur dieser Lage aus Faserverbundkeramik bestimmt ist. Die Beschichtung dieser äußeren Oberfläche kann durch gängige Methoden, die dem Fachmann bekannt sind, bewerkstelligt werden.

In einer weiteren Ausgestaltungsform wird die innere Oberfläche der äußeren Lage der erfindungsgemäßen Faserverbundkeramik mit einer elektrisch leitfähigen Schicht überzogen. Dabei gilt als innere Oberfläche dieser äußeren Lage der erfindungsgemäßen Faserverbundkeramik die Oberfläche, welche innerhalb dieser äußeren Lage von den Porenwänden der in dieser äu-ßern Lage enthaltenen offenen Poren resultierend von der offenen Porosität gebildet wird.. Die Beschichtung der inneren Oberfläche kann durch gängige Methoden, die dem Fachmann bekannt sind, bewerkstelligt werden. Beispielsweise wird in EP1328344A1 wird ein Verfahren für die Beschichtung poröser keramischer Träger mit Metallen wie Platin, Niob, Tantal, Molybdän, Wolfram offenbart. Des Weiteren kann die innere Oberfläche der Faserverbundkeramik durch Abscheidung aus der Gasphase mittels Chemical Vapor Deposition (CVD) oder Chemical Vapor Infiltration (CVI) beschichtet werden. Wenn ein flüchtiger organischer Precursor eingesetzt wird, bildet sich an der Oberfläche der Faserverbundkeramik eine Schicht aus Kohlenstoff, beispielsweise Kohlenstoff aus Methan. Wenn als Precursor eine flüchtige Metallverbindung eingesetzt wird, bildet sich an der Oberfläche der Faserverbundkeramik das entsprechende Metall, beispielsweise Eisen aus Eisenpentacarbonyl.

Bevorzugter Parameter bei der Beschichtung der äußeren oder inneren Oberfläche der Faserverbundkeramik ist die Gewichtsbeladung der Lage aus Faserverbundkeramik mit leitfähigem Material von 0,1% bis 10%, bevorzugt von 0,5% bis 5%. Dabei versteht man als Gewichtsbeladung das Verhältnis der Masse der aufgetragenen Schicht aus elektrisch leitfähigem Material zur Masse der OCMC-Lage, die als Träger dieser Schicht dient.

In eine weitere Ausgestaltungsform wird zwischen der inneren Lage des Verbundrohres (nicht offen poröse monolithische Oxid-Keramik) und der äußeren Lage (oxidische Faserverbundkeramik) ein Streifen aus elektrisch leitfähigem Material eingebettet. Dieser Streifen kann bevorzugt bestehen aus Fasersträngen aus elektrisch leitenden keramischen Fasern, beispielsweise Kohlenstoff- oder Siliciumcarbid-Fasern. Dabei können diese Fasern zu einem Faden verzwirbelt oder aufgefächert sein. Es können auch metallischer Draht oder Drahtbündel enthaltend bevorzugt Eisen, Nickel, Chrom, Molybdän, Platin, Tantal, Niob und /oder Wolfram zur Anwendung kommen, wobei die Litzen aus Rund- oder Flachdraht bestehen können. Es können auch Bänder aus Metall sein, die in Längsrichtung oder spiralförmig um die innere Lage aus nicht offen poröser monolithischer Keramik gewickelt sind. Es kann auch mindestens eine Hülse aus Metall sein, die um die innere Lage aus nicht offen poröser monolithischer Keramik gewickelt ist. Es kann auch eine metallische Leiterbahn sein, die auf die Außenfläche der inneren Lage aufgebracht ist. Eine Methode zur Einbettung eines Heizleiters in der Wand der innere Lage aus nicht offen poröser monolithischer Keramik wird in EP1972853B1 offenbart.

Zur elektrischen Beheizung von Reaktoren mit gasdurchströmten monolithischen Reaktionsblöcken finden sich allgemeine Hinweise in der WO 2004/091773 A1, insbesondere wird hier ein Reaktorgehäuse beschrieben, bei welchem ein inertgasgespülter, doppelwandiger Mantel zur Anwendung kommt (Anspruch 1).

Die EP 684071 A2 offenbart einen Monolithreaktor aus Aktivkohle für Temperatur getriebene Adsorptionsprozesse, wobei elektrischer Strom in das System eingeleitet wird.

Die GB 1238468 offenbart einen elektrisch beheizten Festbettreaktor für endotherme Reaktionen mit parallel gegenüber angeordneten Elektroden.

Die DE 3533385 C1 offenbart einen elektrisch beheizten Rohrofen mit keramischen Rohren und zwischen den Rohrreihen angeordneten Heizelementen. Die äußere und die innere Abgrenzung des Ofenraums funktionieren als Stahlwände. Dabei sind die Reaktorrohre anfällig für Sprödbruch und es besteht ein erheblicher Wärmetransportwiderstand zwischen den Heizelementen und dem Reaktionsraum.

Die DE 4306896 A1 offenbart Heizrohre, die aus einer porösen Keramik bestehen, welche im Innern ein elektrisches Heizelement enthalten. Ein Gas wird stirnseitig in die Rohre eingeleitet, überströmt das Rohr und verlässt das Rohr durch seine poröse Wand. Die Wärmeabgabe der Heizrohre erfolgt durch Kombination aus Strahlungs- und konvektiver Wärmeübertragung. Die Heizelemente mit gasdurchlässiger Wand sind als Reaktionsrohre ungeeignet.

Weiterhin ist die elektrische Beheizung von metallischen Rohren allgemein bekannt. Hier stehen jedoch aufgrund der Eigenschaften des Werkstoffs im Vergleich zu keramischen Rohren nur niedrigere Temperaturen zur Verfügung. Weiterhin wird in diesem Fall das gesamte metallische Rohr beheizt, welches einen relativ niedrigen elektrischen Widerstand aufweist, dadurch wird eine relativ hohe Stromstärke für die Aufheizung benötigt. Der längenbezogene elektrische Widerstand eines konventionellen metallischen Reaktionsrohres beträgt $10^2$ S*m bis $10^4$ S*m. Die erforderliche elektrische Stromdichte durch die Rohrwand beträgt 2 A/mm$^2$ bis 20 A/mm$^2$. Beispielsweise beträgt die flächenbezogene Wärmestrom durch die Rohrwand bei der Dampfreformierung von Erdgas ca. 100 kW/m$^2$. Der Rohrdurchmesser beträgt 100mm, die Wandstärke 10mm. Der längenbezogene elektrische Widerstand beträgt 0,16 m$\Omega$/m. Der erforderliche elektrische Strom, um die angegebene Leistung einzutragen, beträgt ca. 14000 A. Der Spannungsabfall über die Rohrlänge beträgt 2,2 V/m. Die elektrische Kontaktierung der Reformerrohre stellt eine große technische Hürde dar, um bei der Einleitung des oben angegebenen elektrischen Stroms eine Überhitzung der Verbindung zwischen der Zuführungsleitung und dem Rohr zu verhindern. Ferner ist hier eine lokal unterschiedlich starke Beheizung nur mit sehr viel Aufwand zu realisieren.

Die spezifische Wärmeübertragungsleistung durch die Wand von Rohrreaktoren beträgt allgemein etwa 50 kW/m$^2$ bis 150 W/m$^2$. Rohrdurchmesser liegen in einer Größenordnung von 10 bis 70mm. Die Rohrwanddicke liegt in der Regel zwischen 1mm und 10mm.

Der Fachmann kann dem aufgeführten Stand der Technik keine Hinweise für die erfindungsgemäße Lösung der Integration eines elektrisch leitfähigen Systems in dem Verbundrohr, welches insbesondere auch zur Beheizung geeignet ist, entnehmen. Er hätte das auch so nicht in Erwägung gezogen, da oxidische Keramiken, insbesondere Faserverbundkeramiken mit hohem Aluminiumoxidanteil, als elektrische Isolatoren bekannt sind. Des Weiteren weisen oxidische Faserverbundkeramik eine geringe Wärmeleitfähigkeit auf und werden vom zu beheizenden Innenraum noch zusätzlich durch die innere Lage der monolithischen Oxid Keramik abgeschirmt. Daher lag für ihn die Integration eines elektrisch leitfähigen Systems genau in dieser Lage des Verbundrohres nicht nahe, insbesondere da als eine der bevorzugten Hauptanwendungen für das erfindungsgemäße Verbundrohr die Nutzung des elektrisch leitfähigen Systems zur Beheizung des Innenraums des Verbundrohres darstellt und dafür ist die geringe Wärmeleitfähigkeit ja gerade von Nachteil. Üblicherweise liegt die Wärmeleitfähigkeit von der bevorzugt eingesetzten oxidischen Faserverbundkeramik bei 1 W/(m*K) bis 50 W/(m*K), bevorzugt 1 W/(m*K) bis 10 W/(m*K). Weiterhin hätte der Fachmann eine solche Ausgestaltung auch deswegen nicht in Erwägung gezogen, da bei Erwärmung eine Schädigung des Systems, beispielsweise Delaminieren der innerem und der äußeren Lage durch Temperaturwechsel zu befürchten war. Überraschenderweise kann jedoch die Hybridstruktur des erfindungsgemäßen Verbundrohres (resultierend aus den beiden Lagen) hier die befürchtete Gefahr einer Schädigung des Verbundrohres bei Einleitung des Stromes nachhaltig verringern.

Das elektrisch leitfähige System des erfindungsgemäßen Verbundrohres kann für unterschiedliche Zwecke eingesetzt werden. So kann es beispielsweise bevorzugt zur Beheizung verwendet werden, was sich beispielsweise für den Fall, dass das Verbundrohr als Reaktionsrohr eingesetzt wird, empfiehlt. Tabelle 3 zeigt bevorzugte erfindungsgemäße Merkmale und ihre bevorzugten Wertebereiche.

Tabelle 3: Bevorzugte erfindungsgemäße Merkmale und ihre Wertebereiche

| Parameter | Einheit | UG | UGB | UGBB | OGBB | OGB | OG |
|---|---|---|---|---|---|---|---|
| Rohr-Innendurchmesser | mm | 10 | 15 | 20 | 100 | 150 | 200 |
| Rohrwanddicke | mm | 0,5 | 1 | | 3 | | 5 |
| Wanddicke innere Lage Monolithkeramik | mm | 0,5 | 1 | | 3 | | 5 |
| Wanddicke äußere Lage OCMC | mm | 0,1 | 0,2 | 0,5 | 2 | 3 | 5 |
| Beheizte Rohrlänge | m | 0,1 | 0,5 | 1 | 10 | 20 | 30 |
| Flächenbezogene Wärmestromdichte | kW/m$^2$ | 5 | 10 | 20 | 100 | 150 | 250 |
| Elektrische Stromdichte | A/mm$^2$ | 2 | 10 | 20 | 50 | 100 | 500 |
| Stromstärke | A | 10 | 100 | 200 | 1000 | 2000 | 5000 |
| Längenspezifischer Widerstand | $\Omega$/m | 0,005 | 0,01 | 0,02 | 0,2 | 0,5 | 1 |
| Spannungsabfall | V/m | 1 | 2 | 5 | 100 | 500 | 1000 |

(fortgesetzt)

| Parameter | Einheit | UG | UGB | UGBB | OGBB | OGB | OG |
|---|---|---|---|---|---|---|---|
| Maximale Temperatur im Reaktionsvolumen | °C | 400 | 600 | 800 | 1200 | 1300 | 1600 |
| Maximaltemperatur in der beheizten Wand | °C | 400 | 600 | 800 | 1200 | 1300 | 1600 |
| Max. Temperaturdifferenz in der Wand | K | 1 | 2 | 5 | 50 | 100 | 250 |
| Max. radiale Temperaturdifferenz zwischen Wand und Reaktionsvolumen | K | 0 | 0 | 0 | 200 | 300 | 500 |
| UG: untere Grenze | | | | OG: obere Grenze | | | |
| UGB: bevorzugte untere Grenze | | | | OGB: bevorzugte obere Grenze | | | |
| UGBB: besonders bevorzugte untere Grenze | | | | OGBB: besonders bevorzugte obere Grenze | | | |

Weiterhin kann das elektrisch leitfähige System auch zur Temperaturmessung verwendet werden. Hierbei werden vorteilhaft metallische Fäden in das Fasergerüst der Faserverbundkeramik eingesetzt. Alternativ werden metallische Drähte zwischen den keramischen Lagen oder am äußeren Umfang geführt. Diese metallischen Fäden oder metallischen Streifen enthalten vorteilhaft Eisen, Nickel, Chrom, Molybdän, Platin, Rhodium, Palladium, Tantal, Niob und /oder Wolfram. Die metallischen Fäden oder metallischen Drähte werden an definierten Stellen entlang des Rohres elektrisch kontaktiert. Die Kontaktleitungen werden isoliert in die Umgebung des Rohres herausgeführt. Auf diese Weise funktionieren die metallischen Fäden, Drähte oder Streifen als Widerstandsthermometer und können eine gemittelte Temperatur über den Rohrumfang zwischen den zwei Kontaktpunkten erfassen.

Alternativ bestehen die metallischen Fäden oder Drähte aus zwei Werkstoffen, wobei der Übergang zwischen ihnen eine quasi punktförmige Verbindungsstelle, beispielsweise eine Schweiß- oder Lötstelle ist und diese sonst keine gemeinsame Kontaktstelle besitzen. Bevorzugte Werkstoffpaare sind Ni und NiCr, Eisen und CuNi, NiCrSi und NiSi, NiCr und CuNi, Cu und CuNi, Pt und PtRh, W und Re. Die Enden dieser Fäden oder Drähte werden elektrisch kontaktiert. Die Kontaktleitungen werden isoliert in die Umgebung des Rohres herausgeführt. Auf diese Weise funktionieren die zusammengesetzten Fäden oder Drähte als Thermopaare und können die Temperatur am Übergangspunkt zwischen den zwei Werkstoffen erfassen.

Optional können metallische Fäden oder Drähte gleichzeitig als Heizungselemente und als Temperatursensoren genutzt werden. Dabei werden die metallischen Fäden oder Drähte im Fasergerüst der Faserverbundkeramik oder an die elektrische Spannungsversorgung und gleichzeitig an eine Widerstandsmessung angeschlossen.

In Versuchen wurde festgestellt, dass im erfindungsgemäßen mehrlagigen Verbundrohr eine gezielte Einstellung eines axialen Temperaturprofils entlang der Rohrinnenwand ermöglicht im Gegensatz zu einem Rohr gleicher Geometrie und Struktur basierend auf einem metallischen Werkstoff, da das erfindungsgemäße mehrlagige Verbundrohr die Möglichkeit eröffnet, eine lokal variable Beheizung in verfahrenstechnisch einfacher Art und Weise zu gewährleisten. Die hieraus resultierende niedrigere mittlere Temperatur entlang des Rohres führt dazu, dass die Verkokung bei dem erfindungsgemäßen Verbundrohr stärker unterbunden wird als bei einem vergleichbaren metallischen Rohr. Das hätte der Fachmann so nicht erwartet.

Die zwei Lagen bei dem erfindungsgemäßen Verbundrohr haften vorteilhaft aneinander durch kraftschlüssige oder stoffschlüssige Verbindungen. Relevante kraftschlüssige Verbindungen ist hier beispielsweise eine Pressverbindung. Relevante stoffschlüssige Verbindungen für diese Erfindung sind Kleben und Sintern. Alle Verbindungsarten gehören zum Stand der Technik (Informationszentrum Technische Keramik (IZTK): Brevier technische Keramik, Fahner Verlag, Lauf (2003)).

Die Wand des mehrlagigen Verbundrohrs beinhaltet vorteilhaft zumindest bereichsweise zwei Lagen, eine Lage aus nicht offen poröser monolithischer Oxid-Keramik und eine Lage aus oxidischer Faserverbundkeramik; d.h. es kann sich bei dem mehrlagigen Verbundrohr auch um einen Verbundrohr-Abschnitt handeln. Beispielsweise sei ein zoniertes oder punktuelles nur bereichsweise aus zwei Lagen bestehendes Verbundrohr genannt. Bevorzugt beinhaltet jedoch die gesamte Wand des Verbundrohres, die einer äußeren Temperatur, z.B. durch eine Heizkammer, von > 1100°C ausgesetzt ist, mindestens zwei Lagen, eine Lage aus nicht offen poröser monolithischer Oxid-Keramik und eine Lage aus oxidischer Faserverbundkeramik.

Vorteilhaft ist das Innenrohr umwickelt mit einer Lage aus oxidischer Faserverbundkeramik. Die zwei Lagen können kraftschlüssig oder stoffschlüssig miteinander verbunden und ein Bauteil bilden. Die Eigenschaften dieses Bauteils sind durch die Temperaturbeständigkeit und das Verformungsverhalten der Lage aus oxidischer Faserverbundkeramik bestimmt. Die Dichtigkeit ist durch das Innenrohr aus Oxid-Keramik gegeben. Bei Verwendung eines oxid-keramischen Innenrohrs weist die Innenseite der Rohrwand eine hohe chemische Beständigkeit und Abriebfestigkeit, mit einer Härte $HV_{10} > 14000$ MPa für Aluminiumoxid, $HV_{10} > 12000$ MPa für Zirkonoxid, $HV_{10} > 7000$ MPa für Mullit auf.

Dabei bedeutet $HV_{10}$ die Vickershärte gemäß DIN EN ISO 6507-1:2018 bis 4:2018

Bei 1400°C ist beispielsweise Aluminiumoxid über den gesamten Bereich von einem Sauerstoffpartialdruck von $10^{-25}$ bar bis 10 bar beständig, während alle anderen keramischen Werkstoffe einen Übergang zwischen Reduktion und Oxidation durchlaufen und dadurch korrodieren (Darken, L. S., & Gurry, R. W. (1953). Physical chemistry of metals. McGraw-Hill).

Der Rohrinnendurchmesser des mehrlagigen Verbundrohres beträgt vorteilhaft 10 mm bis 1000 mm, bevorzugt 10 mm bis 100 mm, insbesondere 40 mm bis 80 mm. Die gesamte Wandstärke aus mindestens zwei Lagen beträgt vorteilhaft 0,5 mm bis 50 mm, bevorzugt 1 mm bis 30 mm, insbesondere 2 mm bis 20 mm. Dabei beträgt vorteilhaft die Dicke der Lage aus oxidischer Faserverbundkeramik weniger als 90 %, bevorzugt weniger als 50 %, insbesondere weniger als 25 % der gesamten Wandstärke; vorteilhaft beträgt die Dicke der Lage aus oxidischer Faserverbundkeramik mindestens 10 % der gesamten Wandstärke. Die Dicke der Lage aus monolithischer Oxid-Keramik beträgt vorteilhaft von 0,5 mm bis 45 mm, bevorzugt von 1 mm bis 25 mm, besonders bevorzugt von 2 mm bis 15 mm. Die Dicke der Lage aus oxidischer Faserverbundkeramik beträgt vorteilhaft von 0,5 mm bis 5 mm, bevorzugt von 0,5 mm bis 3 mm.

Die Länge des mehrlagigen Verbundrohres beträgt vorteilhaft 0,5 bis 20 m, bevorzugt 1 bis 10 m, insbesondere 1,5 bis 7 m. Es können mehrere solche Rohre durch Bögen und/oder Sammler miteinander verbunden sein, wobei ggf. auch diese Bögen und Sammler als mehrlagige Verbundformteile ausgeführt sein können.

Das offenbarte mehrlagige Verbundrohr umfassend mindestens eine Lage aus nicht offen poröser monolithischer Oxid-Keramik und mindestens eine Lage aus oxidischer Faserverbundkeramik weist vorteilhaft eine offene Porösität von $5\% < \varepsilon < 50$ %, bevorzugt $10\% < \varepsilon < 30$ % auf. Das mehrlagige Verbundrohr ist besonders vorteilhaft gasdicht. Unter dem Begriff "gasdicht" wird ein Festkörper verstanden, der gemäß DIN EN 623-2 eine offene Porosität von Null besitzt. Die zulässige Messungenauigkeit liegt bei < 0,3 %.

Die Dichte der nicht offen porösen monolithischen Oxid-Keramik ist vorteilhaft größer als die Dichte der oxidischen Faserverbundkeramik. Die Dichte der nicht offen porösen monolithischen Oxid-Keramik beträgt vorteilhaft zwischen $1000 \frac{kg}{m^3}$ und $7000 \frac{kg}{m^3}$, insbesondere zwischen 2000 $\frac{kg}{m^3}$ und $5000 \frac{kg}{m^3}$, beispielsweise $2800 \frac{kg}{m^3}$ für Mullit (ca. 70% Aluminiumoxid) oder $3700 \frac{kg}{m^3}$ für Aluminiumoxid mit einer Reinheit > 99,7%. Die Dichte der Lage aus Faserverbundkeramik beträgt zwischen $500 \frac{kg}{m^3}$ und $3000 \frac{kg}{m^3}$. Das Verhältnis der Dichten der monolithischen Keramik und der Faserverbundkeramik in der Verbundstruktur beträgt vorteilhaft zwischen 1:1 und 3:1, insbesondere zwischen 1:1 und 2:1.

Der materialabhängige Elastizitätsmodul der oxidischen Faserverbundkeramik ist vorteilhaft niedriger ist als der Elastizitätsmodul der nicht offen porösen monolithischen Oxid-Keramik. Der Elastizitätsmodul der nicht offen porösen monolithischen Oxid-Keramik beträgt vorteilhaft zwischen 100 GPa und 500 GPa, insbesondere zwischen 150 GPa und 400 GPa, beispielsweise 150 GPa für Mullit (ca. 70% Aluminiumoxid) oder 380 GPa für Aluminiumoxid mit einer Reinheit > 99,7%. Der Elastizitätsmodul der Lage aus Faserverbundkeramik beträgt zwischen 40 GPa und 200 GPa. Diese Werte gelten bei 25°C. Das Verhältnis der Elastizitätsmoduln der monolithischen Keramik und der Faserverbundkeramik in der Verbundstruktur beträgt vorteilhaft zwischen 1:1 und 5:1, insbesondere zwischen 2:1 und 3:1.

Der materialabhängige Wärmeleitfähigkeitskoeffizient der nicht offen porösen monolithischen Oxid-Keramik ist vorteilhaft größer als der Wärmeleitfähigkeitskoeffizient der oxidischen Faserverbundkeramik. Der Wärmeleitfähigkeitskoeffizient der nicht offen porösen monolithischen Oxid-Keramik beträgt vorteilhaft zwischen $1 \frac{W}{m \cdot K}$ und $50 \frac{W}{m \cdot K}$, insbesondere zwischen $2 \frac{W}{m \cdot K}$ und $40 \frac{W}{m \cdot K}$, beispielsweise $6 \frac{W}{m \cdot K}$ für Mullit (ca. 70% Aluminiumoxid) oder $30 \frac{W}{m \cdot K}$ für Aluminiumoxid mit einer Reinheit > 99,7%. Der Wärmleitfähigkeitskoeffizient der Lage aus Faserverbundkeramik beträgt zwischen $0,5 \frac{W}{m \cdot K}$ und $10 \frac{W}{m \cdot K}$, bevorzugt zwischen $1 \frac{W}{m \cdot K}$ und 5 $5 \frac{W}{m \cdot K}$. Diese Werte gel-ten bei 25°C. Das Verhältnis der Wärmeleitfähigkeitskoeffizienten der monolithischen Keramik und der Faserverbundkeramik in der Verbundstruktur beträgt vorteilhaft zwischen 1:1 und 20:1, insbesondere zwischen 2:1 und 10:1

Der Druckreaktor ist für folgende Druckbereiche ausgelegt; vorteilhaft 0,1 bar$_{abs}$ - 100 bar$_{abs}$, bevorzugt 1 bar$_{abs}$ - 50 bar$_{abs}$, weiter bevorzugt 1,5 bar$_{abs}$ - 30 bar$_{abs}$, Die Druckdifferenz zwischen der Reaktionskammer und der Heizkammer beträgt vorteilhaft von 0 bar bis 100 bar, bevorzugt von 0 bar und 50 bar, weiter bevorzugt von 0 bar bis 30 bar.

Der Wärmedurchgangskoeffizient durch die Wand des erfindungsgemäßen mehrlagigen Verbundrohres ist vorteilhaft > $500 \frac{W}{m^2 K}$, bevorzugt > $1000 \frac{W}{m^2 K}$, weiter bevorzugt > $2000 \frac{W}{m^2 K}$, insbesondere > $3000 \frac{W}{m^2 K}$. Die Vorgehensweise zur Bestimmung des Wärmedurchgangskoeffizienten ist dem Fachmann bekannt (Kapitel Cb: Wärmedurchgang, VDI-Wärmeatlas, 8. Auflage, 1997). Gemäß dieser Definition gilt:

$$k_{loc} = \frac{1}{R_w \cdot A},$$

wobei

$$R_w = \sum_{j=1}^{n} \left(\frac{\delta}{\lambda \cdot A_m}\right)_j$$

$$A_{m,j} = \left(\frac{A_1 - A_2}{\ln\frac{A_1}{A_2}}\right)_j$$

Dabei bedeuten die Symbole:

$R_w$: Wärmedurchgangswiderstand einer mehrlagigen zylindrischen Wand in $\frac{K}{W}$,

$k_{loc}$: Wärmedurchgangskoeffizient einer mehrlagigen zylindrischen Wand in $\frac{1}{m}$,

$A$: Zylindrische Mantelfläche in $m^2$,

$\lambda$: Wärmeleitfähigkeitskoeffizient einer homogenen Lage in $\frac{W}{m\,K}$,

$\delta$: Dicke einer homogenen Lage in m,

$n$: Anzahl der Lagen einer mehrlagigen zylindrischen Wand, die Indizes:

1: Innenseite einer zylindrischen Lage,
2: Außenseite einer zylindrischen Lage,
$m$: Mittlere Fläche

Das erfindungsgemäße mehrlagige Verbundrohr kann über seine Länge einen variablen Querschnitt und eine variable Wandstärke haben. Beispielsweise kann das mehrlagige Verbundrohr in Strömungsrichtung der Gases trichterförmig zu- oder abnehmen.

An den zwei Enden des mehrlagigen Verbundrohres kann der Randbereich der äußeren Lage vorteilhaft versiegelt sein. Die versiegelten Enden dienen als Übergänge zur gasdichten Verbindung des Verbundrohres mit metallischen gasführenden Leitungen, Verteilern, Sammlern oder Durchführungen durch die Hülle der umgebenden Heizkammer.

Als nicht offen poröse monolithische Oxid-Keramik können alle dem Fachmann bekannten oxidischen Keramiken verwendet werden, insbesondere analog dem Informationszentrum Technische Keramik (IZTK): Brevier technische Keramik. Fahner Verlag, Lauf (2003). Bevorzugt sind nicht offen poröse monolithische Oxid-Keramiken mit mindestens 99 Gew.-% $Al_2O_3$ und/oder Mullit. Als nicht offen poröse Keramik können insbesondere Haldenwanger Pythagoras 1800Z™ (Mullit), Alsint 99,7™ oder Friatec Degussit® AL23 (Aluminiumoxid) zum Einsatz kommen.

Die Faserverbundkeramiken sind charakterisiert durch eine Matrix aus keramischen Partikeln zwischen die keramische Fasern, bevorzugt Langfasern, insbesondere Endlosfasern, als Wickelkörper oder als Textil eingebettet sind. Es wird von faserverstärkter Keramik, Verbundkeramik oder auch Faserkeramik gesprochen. Matrix und Faser können dabei im Prinzip aus allen bekannten keramischen Werkstoffen bestehen, wobei in diesem Zusammenhang auch Kohlenstoff als keramischer Werkstoff behandelt wird.

Unter "oxidischer Faserverbundkeramik" wird eine Matrix aus oxidischen keramischen Partikeln verstanden, die keramische, oxidische und/oder nicht-oxidische Fasern, enthält.

Bevorzugte Oxide der Fasern und/oder der Matrix sind Oxide eines Elementes aus der Gruppe: Be, Mg, Ca, Sr, Ba, Seltene Erden, Th, U, Ti, Zr, Hf, V, Nb, Ta, Cr, Mo, W, Mn, Fe, Co, Ni, Zn, B, Al, Ga, Si, Ge, Sn, Li, Na, K, Rb, Cs, Re, Ru, Os,Ir, Pt, Rh, Pd, Cu, Ag, Au, Cd, in, TI, Pb, P, As, Sb, Bi, S, Se, Te, sowie Mischungen dieser Oxide.

Die Mischungen sind sowohl als Material für die Faser als auch für die Matrix vorteilhaft geeignet. Faser und Matrix müssen generell nicht aus demselben Material sein.

Grundsätzlich sind nicht nur binäre, sondern auch ternäre und höhere Mischungen geeignet und von Bedeutung. In einer Mischung können die einzelnen Bestandteile in gleicher molarer Menge vorkommen, vorteilhaft sind aber Mischungen mit stark unterschiedlicher Konzentration der einzelnen Bestandteile der Mischung, bis hin zu Dotierungen, bei denen eine Komponente in Konzentrationen von < 1 % vorkommt.

Besonders vorteilhaft sind folgende Mischungen: Binäre und ternäre Mischungen aus Aluminiumoxid, Zirkoniumoxid und Yttriumoxid (z.B. Zirkoniumoxidverstärktes Aluminiumoxid); Mischungen aus Siliziumcarbid und Aluminiumoxid; Mischungen aus Aluminiumoxid und Magnesiumoxid (MgO-Spinell); Mischungen aus Aluminiumoxid und Siliziumoxid (Mullit); Mischung aus Aluminium- und Magnesiumsilikate, Ternäre Mischung aus Aluminiumoxid, Siliziumoxid und Magnesiumoxid (Cordierit); Steatit (Magnesiumsilikat); Zirkonoxid-verstärktes Aluminiumoxid; Stabilisiertes Zirkoniumoxid ($ZrO_2$): Stabilisatoren in Form von Magnesiumoxid (MgO), Calciumoxid (CaO) oder Yttriumoxid ($Y_2O_3$), gegebenenfalls kommen auch Ceroxid ($CeO_2$), Scandiumoxid ($ScO_3$) oder Ytterbiumoxid ($YbO_3$) als Stabilisatoren zum Einsatz; ferner Aluminiumtitanat (stöchiometrische Mischung von Aluminiumoxid und Titanoxid); Siliziumnitrid und Aluminiumoxid (Siliziumaluminiumoxinitride SIALON).

Als zirkoniumoxidverstärktes Aluminiumoxid wird vorteilhaft $Al_2O_3$ mit 10 bis 20 Mol-% $ZrO_2$ eingesetzt. Zur Stabilisierung von $ZrO_2$ kann vorteilhaft 10 bis 20 Mol-% CaO, bevorzugt 16 Mol-%, 10 bis 20 Mol-% MgO, bevorzugt 16, oder 5 bis 10 Mol-% $Y_2O_3$, bevorzugt 8 Mol-% ("vollstabilisiertes Zirkonoxid") oder 1 bis 5 Mol-% $Y_2O_3$, bevorzugt 4 Mol-% ("teilstabilisiertes Zirkonoxid") verwendet werden. Als ternäre Mischung sind z.B. 80% $Al_2O_3$, 18,4% $ZrO_2$ und 1,6% $Y_2O_3$ vorteilhaft.

Neben den genannten Materialien (Mischungen und Einzelbestandteile) sind auch Fasern aus Basalt, Bornitrid, Wolframcarbid, Aluminiumnitrid, Titandioxid, Bariumtitanat, Bleizirkonattitanat und/oder Borcarbid in oxid-keramischer Matrix denkbar.

Um eine gewünschte Armierung durch die zumindest zwei Lageen zu erzielen, können die Fasern der faserverstärkten Keramik radial umlaufend und/oder sich kreuzend auf der ersten Lage der nicht offen porösen Keramik angeordnet sein.

Als Fasern kommen Verstärkungsfasern in Frage, die in die Klassen oxidische, carbidische, nitridische Fasern bzw. C-Fasern und SiBCN-Fasern fallen. Insbesondere ist vorgesehen, dass die Fasern des keramischen Verbundwerkstoffes Aluminiumoxid-, Mullit-, Siliziumcarbid-, Zirkonoxid- und/oder Kohlenstoff-Fasern sind. Mullit besteht dabei aus Mischkristallen aus Aluminiumoxid und Siliziumoxid. Bevorzugt ist die Verwendung von Fasern aus Oxidkeramik ($Al_2O_3$, $SiO_2$, Mullit) oder aus Nichtoxidkeramik (C, SiC).

Es kommen vorteilhaft kriechbeständige Fasern zum Einsatz, d. h. Fasern, die im Kriechbereich - im Temperaturbereich bis 1400 °C - keine oder minimale zeitliche Zunahme der bleibenden Verformung, also der Kriechdehnung zeigen. Die Firma 3M gibt für die NEXTEL-Fasern folgende Grenztemperaturen an für die bleibende Dehnung von 1 % nach 1000 h unter Zugbelastung von 70 MPa an: NEXTEL 440: 875 °C, NEXTEL 550 und NEXTEL 610: 1010 °C, NEXTEL 720: 1120 °C an (Referenz: Nextel™ Ceramic Textiles Technical Notebook, 3M, 2004).

Die Fasern haben vorteilhaft einen Durchmesser zwischen 10 und 12 μm. Sie sind vorteilhaft miteinander - üblicherweise mit Leinwand- oder Satinbindung - zu Textilbahnen verwoben, zu Schläuchen geflochten oder als Faserbündel um eine Form gewickelt. Zur Herstellung des keramischen Verbundsystems werden die Faserbündel oder -gewebe beispielsweise mit einem Schlicker, der die Komponenten der späteren keramischen Matrix, vorteilhaft $Al_2O_3$ oder Mullit, enthält, infiltriert (Schmücker, M. (2007), Faserverstärkte oxidkeramische Werkstoffe, Materialwissenschaft und Werkstofftechnik, 38(9), 698-704). Durch Wärmebehandlung bei > 700 °C entsteht schließlich eine hochfeste Verbundstruktur aus den Keramikfasern und der keramischen Matrix mit einer Zugfestigkeit von vorteilhaft > 50 MPa, bevorzugt > 70 MPa, weiter bevorzugt > 100MPa, insbesondere > 120MPa.

Bevorzugter Weise wird als Faserverbundkeramik SiC/ $Al_2O_3$, SiC/Mullit, C/ $Al_2O_3$, C/Mullit, $Al_2O_3$/$Al_2O_3$, $Al_2O_3$/Mullit, Mullit/ $Al_2O_3$ und/oder Mullit/Mullit eingesetzt. Dabei bezeichnet das Material vor dem Schrägstrich den Fasertyp und das Material nach dem Schrägstrich den Matrixtyp. Als Matrixsystem für die keramische Faserverbundstruktur können auch Siloxane, Si-Precursoren und unterschiedlichste Oxide, wie zum Beispiel auch Zirkonoxid, eingesetzt werden. Bevorzugt enthält die Faserverbundkeramik mindestens 99 Gew-% $Al_2O_3$ und/oder Mullit.

In der vorliegenden Erfindung werden bevorzugt Faserverbundkeramiken auf der Basis oxidkeramischer Fasern, beispielsweise 3M™ NEXTEL™ 312, NEXTEL™ 440, NEXTEL™ 550, NEXTEL™ 610 oder NEXTEL™ 720 eingesetzt. Besonders bevorzugt ist die Verwendung von NEXTEL™ 610 und / oder NEXTEL™ 720.

Die Matrix weist einen Füllgrad an Fasern (Volumenanteil der Fasern in der Verbundstruktur) von 20 bis 40 % auf, der gesamte Feststoffgehalt der Verbundstruktur beträgt zwischen 50 und 80 %. Faserverbundkeramiken auf Basis oxidischer keramischer Fasern sind chemisch beständig in oxidierender und in reduzierender Gasatmosphäre (d. h. keine Gewichtsänderung nach Lagerung in Luft bei 1200 °C über 15h (Referenz: Nextel™ Ceramic Textiles Technical Notebook, 3M, 2004)) und thermisch beständig bis über 1300 °C. Faserverbundkeramiken besitzen ein quasi duktiles Verformungsverhalten. Damit sind sie temperaturwechselbeständig und besitzen ein quasi zähes Bruchverhalten. So kündigt sich das Versagen eines Bauteils an, bevor es bricht.

Die Faserverbundkeramik weist vorteilhaft eine offene Porosität ε von größer als 5 % bis kleiner als 50 %, bevorzugt von größer als 10% bis kleiner als 30% auf; sie ist demnach nicht gasdicht gemäß Definition in DIN 623-2.

Die Faserverbundkeramik weist vorteilhaft eine Langeinsatztemperatur von bis zu 1500 °C, bevorzugt bis zu 1400 °C, besonders bevorzugt bis zu 1300 °C auf.

Die Faserverbundkeramik weist vorteilhaft eine Festigkeit > 50 MPa, bevorzugt > 70 MPa, besonders bevorzugt > 100 MPa, insbesondere > 120 MPa auf.

Die Faserverbundkeramik weist vorteilhaft eine Streckgrenze elastischer Verformung von 0,2 bis 1 % auf.

Die Faserverbundkeramik weist vorteilhaft eine Temperaturwechselbeständigkeit gemäß DIN EN 993-11 auf. Die Temperaturwechselbeständigkeit des erfindungsgemäßen Verbundrohres ist hierbei in der Regel größer als 50K/h, bevorzugt größer als 300K/h, besonders bevorzugt größer als 500K/h.

Die Vertiefungen weisen bevorzugt eine Tiefe von 0,5 bis 2mm auf.

Bevorzugt ist die innere Oberfläche des erfindungsgemäßen Verbundrohres zu 10% bis 95%, besonders bevorzugt zu 50% bis 90%, bezogen auf die gesamte innere Oberfläche des Verbundrohres mit Vertiefungen versehen.

Die Vertiefungen in dem erfindungsgemäßen Verbundrohr sind in einer bevorzugten Ausführungsform in ihm Querschnitt kreisförmig aufgebaut und weisen einen (maximalen) Durchmesser von 2mm bis 30mm auf.

Die innere Lage des erfindungsgemäßen Verbundrohres weist eine Mindestschichtdicke von 0,5 mm bis 45 mm, bevorzugt von 1 mm bis 25 mm, besonders bevorzugt von 2 mm bis 15 mm auf.

Die Faserverbundkeramik weist vorteilhaft einen thermischen Wärmeausdehnungskoeffizient [ppm/K] von 4 bis 8,5 auf.

Die Faserverbundkeramik weist vorteilhaft eine thermische Leitfähigkeit von 0,5 bis $5 \frac{W}{m \cdot K}$ auf.

Die Faserverbundkeramik kann durch CVI (Chemical Vapour Infiltration) - Verfahren, Pyrolyse, insbesondere LPI (Liquid Polymer Infiltration) -Verfahren oder durch chemische Reaktion wie LSI (Liquid Silicon Infiltration) -Verfahren hergestellt werden.

Die Versiegelung beider Enden oder eines Endes des mehrlagigen Verbundrohres kann auf vielfache Art und Weise durchgeführt werden:

Beispielsweise kann durch Infiltration oder Beschichtung der äußeren Lage oder der inneren Lage aus Faserverbundkeramik oder nicht offen poröser monolithischer Keramik mit einem Polymer, einer nicht offen porösen Keramik, Pyrokohlenstoff und/oder einem Metall eine Versiegelung erreicht werden. Die versiegelten Bereiche dienen als Dichtflächen. Diese Variante kann bis zu einem Temperaturbereich von < 400 °C eingesetzt werden. Vorteilhaft wird das Verbundrohr lediglich im Randbereich zu dem metallischen Verbindungsstück beschichtet. "Randbereich" bedeutet der letzte Abschnitt vor dem Übergang zu einem anderen Werkstoff, bevorzugt zu einem metallischen Werkstoff, mit einer Länge entsprechend dem 0,05- bis 10-fachem Innendurchmesser des Verbundrohres, bevorzugt entsprechend dem 0,1- bis 5-fachem Innendurchmesser, insbesondere entsprechend dem 0,2- bis 2-fachem Innendurchmesser. Die Dicke der Imprägnierung entspricht vorteilhaft der kompletten Dicke der Lage aus Faserverbundkeramik im Randbereich. Die Verfahren zur Imprägnierung sind dem Fachmann bekannt.

Die vorliegende Erfindung umfasst demnach ein mehrlagiges Verbundrohr beinhaltend mindestens zwei Lagen, eine Lage aus nicht offen poröser monolithischer Keramik, bevorzugt Oxid-Keramik, und eine Lage aus Faserverbundkeramik, bevorzugt oxidischer Faserverbundkeramik, wobei die äußere Lage des Verbundrohres im Randbereich vor dem Übergang zu einem anderen Werkstoff, bevorzugt metallischen Werkstoff, mit Polymer, nicht offen poröser Keramik, (Pyro-)Kohlenstoff und/oder metallischem Werkstoff imprägniert oder beschichtet ist.

Eine andere Möglichkeit der Versiegelung besteht vorteilhaft in dem Anbringen einer Hülse aus Metall an den Randbereich des mehrlagigen Verbundrohres, die bereichsweise mit Hilfe eines Überlappstoßes zwischen der inneren und der äußeren Lage angeordnet ist. Vorteilhaft enthält die Hülse aus Metall einen oder mehrere der folgenden Werkstoffe: Chrom, Titan, Molybdän, Nickelstahl 47Ni, Legierung 80Pt20lr, Legierung 1.3981, Legierung 1.3917 oder ein Trimetall Kupfer / Invar / Kupfer. Vorteilhaft liegt das Verhältnis der Länge des Überlappstoßes zu dem Innendurchmesser des Verbundrohres im Bereich von 0,05 bis 10, bevorzugt von 0,1 bis 5, insbesondere von 0,2 bis 2. In diesem Bereich ist die Hülse aus Metall mit der Außenseite der inneren Lage gasdicht verbunden mit Fügetechniken, die dem Fachmann bekannt sind (Informationszentrum Technische Keramik (IZTK): Brevier technische Keramik, Fahner Verlag, Lauf (2003)). Die äußere Lage ist durch eine stoffschlüssige Verbindung mit der Hülse aus Metall verbunden. Vorteilhaft beträgt die Länge des keramischen Überlappes, d.h. der Bereich beinhaltend äußere Lage und metallische Hülse ohne innere Lage, vom 0,05-fachen bis zum 10-fachen, bevorzugt von 0,1-fachen bis zum 5-fachen, insbesondere von 0,2-fachen bis zum 2-fachen des Innendurchmessers des Verbundrohres.

Die vorliegende Erfindung umfasst demnach ein mehrlagiges Verbundrohr beinhaltend mindestens zwei Lagen, eine innere Lage aus nicht offen poröser monolithischer Keramik, bevorzugt Oxid-Keramik, und eine äußere Lage aus Faserverbundkeramik, bevorzugt oxidischer Faserverbundkeramik, wobei eine Hülse aus Metall am Ende des Verbundrohres, die bereichsweise zwischen der inneren und der äußeren Lage liegt, angeordnet ist.

Folglich umfasst die vorliegende Erfindung ein Verbindungsstück beinhaltend mindestens eine metallische gasführende Leitung, die in Längsrichtung des mehrlagigen Verbundrohres, d.h. in Strömungsrichtung der Edukte, bereichsweise mit mindestens zwei keramischen Lagen überlappt, wobei zumindest eine keramische Lage eine nicht offen poröse monolithische Keramik, bevorzugt Oxid-Keramik, beinhaltet und zumindest eine andere keramische Lage eine Faserverbundkeramik, bevorzugt oxidischer Faserverbundkeramik, beinhaltet.

Folglich umfasst die vorliegende Erfindung eine Sandwichstruktur im Übergangsbereich zwischen metallischem Werkstoff und keramischem Werkstoff beinhaltend eine metallische Lage, eine nicht offen poröse monolithische Keramik-Lage, bevorzugt Oxid-Keramik, und Faserverbundkeramik-Lage, bevorzugt oxidische Faserverbundkeramik. Vorteilhaft liegt die metallische Lage zwischen der inneren und der äußeren keramischen Lage.

Vorteilhaft umfasst die vorliegende Erfindung ein Verbindungsstück, das einen ersten Rohr-Bereich beinhaltend ein metallisches Rohr, z. B. mindestens eine metallische gasführende Leitung, aufweist, das einen zweiten an den ersten Rohr-Bereich anschließenden Rohr-Bereich aufweist, der eine äußere Lage aus Faserverbundkeramik und eine innere metallische Lage aufweist und einen dritten an den zweiten Rohr-Bereich anschließenden Rohr-Bereich aufweist, der eine Sandwichstruktur beinhaltend eine metallische Lage, eine nicht offen poröse monolithische Keramik-Lage und Faserverbundkeramik-Lage aufweist und einen vierten an den dritten Rohr-Bereich anschließenden Rohr-Bereich aufweist, der ein mehrlagiges Verbundrohr beinhaltend mindestens zwei Lagen, eine Lage aus nicht offen poröser monolithischer Keramik und eine Lage aus Faserverbundkeramik, aufweist.

Vorteilhaft weist die Sandwichstruktur des Verbindungsstückes eine innere keramische Lage, eine mittlere metallische Lage und eine äußere keramische Lage auf. Vorteilhaft ist die Faserverbundkeramik die äußere keramische Lage. Vorteilhaft ist die nicht offen poröse monolithische Keramik-Lage die innere Lage. Alternativ ist die Faserverbundkeramik die innere keramische Lage. Alternativ ist die nicht offen poröse monolithische Keramik-Lage die äußere Lage. Bevorzugt ist die Faserverbundkeramik oxidisch. Bevorzugt ist die nicht offen poröse monolithische Keramik eine Oxid-Keramik.

Die Länge des ersten Rohrbereichs ist größer als das 0,05-fache, bevorzugt größer als das 0,1-fache, insbesondere größer als das 0,2-fache des Innendurchmessers des mehrlagigen Verbundrohres; vorteilhaft ist die Länge des ersten Rohrbereichs kleiner als 50 % der gesamten Länge des Verbundrohres.

Die Länge des zweiten Rohrbereichs beträgt vom 0,05-fachen bis zum 10-fachen, bevorzugt von 0,1-fachen bis zum 5-fachen, insbesondere von 0,2-fachen bis zum 2-fachen des Innendurchmessers des mehrlagigen Verbundrohres.

Die Länge des dritten Rohrbereichs beträgt vom 0,05-fachen bis zum 10-fachen, bevorzugt von 0,1-fachen bis zum 5-fachen, insbesondere von 0,2-fachen bis zum 2-fachen des Innendurchmessers des mehrlagigen Verbundrohres.

Vorteilhaft ist im dritten Rohrbereich die Wandstärke des metallischen Rohres, d.h. des metallischen Überlappes, das 0,01-fache bis 0,5-fache der gesamten Wandstärke, bevorzugt das 0,03-fache bis 0,3-fache der gesamten Wandstärke, insbesondere da 0,05-fache bis 0,1-fache der gesamten Wandstärke.

Vorteilhaft ist im zweiten Rohrbereich die Wandstärke des keramischen Überlappes, das 0,05-fache bis 0,9-fache der gesamten Wandstärke, bevorzugt das 0,05-fache bis 0,5-fache der gesamten Wandstärke, insbesondere das 0,05-fache bis 0,25-fache der gesamten Wandstärke. Vorteilhaft ist im zweiten Rohrbereich die Wandstärke der Hülse das 0,05-fache bis 0,9-fache der gesamten Wandstärke, bevorzugt das 0,05-fache bis 0,5-fache der gesamten Wandstärke, insbesondere das 0,05-fache bis 0,025fache der gesamten Wandstärke.

Die Dicke der Lage aus monolithischer Keramik beträgt vorteilhaft von 0,5 mm bis 45 mm, bevorzugt von 1 mm bis 25 mm, besonders bevorzugt von 3 mm bis 15 mm. Die Dicke der Lage aus oxidischer Faserverbundkeramik beträgt vorteilhaft von 0,5 mm bis 5 mm, bevorzugt von 0,5 mm bis 3 mm.

Eine andere Möglichkeit der Versiegelung besteht vorteilhaft in dem Anbringen einer Hülse aus Metall an das Ende des mehrlagigen Verbundrohres, deren Innen- und Außenfläche bereichsweise mit der inneren und mit der äußeren Lage verbunden ist. Die Verbindung mit der inneren Lage ist gasdicht ausgeführt mit Fügetechniken, die dem Fachmann bekannt sind (Informationszentrum Technische Keramik (IZTK): Brevier technische Keramik, Fahner Verlag, Lauf (2003)). Die Verbindung mit der äußeren Lage ist stoffschlüssig.

Vorteilhaft umfasst die vorliegende Erfindung ein Verbindungsstück, das einen ersten Rohr-Bereich beinhaltend ein metallisches Rohr, z. B. mindestens eine metallische gasführende Leitung, aufweist, das einen zweiten an den ersten Rohr-Bereich anschließenden Rohr-Bereich aufweist, der eine äußere keramische Lage und eine innere metallische Lage aufweist und einen dritten an den zweiten Rohr-Bereich anschließenden Rohr-Bereich aufweist, der eine Sandwichstruktur beinhaltend eine innere metallische Lage, eine mittlere und eine äußere Keramik-Lage, wobei eine der Keramik-Lagen eine nicht offen poröse monolithische Keramik-Lage und die andere Keramik-Lage eine Faserverbundkeramik-Lage aufweist und einen vierten an den dritten Rohr-Bereich anschließenden Rohr-Bereich aufweist, der ein mehrlagiges Verbundrohr beinhaltend mindestens zwei Lagen, eine Lage aus nicht offen poröser monolithischer Keramik und eine Lage aus Faserverbundkeramik, aufweist.

Vorteilhaft ist die Faserverbundkeramik die äußere keramische Lage. Vorteilhaft ist die nicht offen poröse monolithische Keramik-Lage die innere Lage. Alternativ ist die Faserverbundkeramik die innere keramische Lage. Alternativ ist die nicht offen poröse monolithische Keramik-Lage die äußere Lage. Bevorzugt ist die Faserverbundkeramik oxidisch. Bevorzugt ist die nicht offen poröse monolithische Keramik eine Oxid-Keramik.

Die Länge des ersten Rohrbereichs ist größer als das 0,05-fache, bevorzugt größer als das 0,1-fache, insbesondere größer als das 0,2-fache des Innendurchmessers des mehrlagigen Verbundrohres; vorteilhaft ist die Länge des ersten Rohrbereichs kleiner als 50 % der gesamten Länge des Verbundrohres.

Die Länge des zweiten Rohrbereichs beträgt vom 0,05-fachen bis zum 10-fachen, bevorzugt von 0,1-fachen bis zum 5-fachen, insbesondere von 0,2-fachen bis zum 2-fachen des Innendurchmessers des mehrlagigen Verbundrohres.

Die Länge des dritten Rohrbereichs beträgt vom 0,05-fachen bis zum 10-fachen, bevorzugt von 0,1-fachen bis zum 5-fachen, insbesondere von 0,2-fachen bis zum 2-fachen des Innendurchmessers des Verbundrohres.

Vorteilhaft ist im dritten Rohrbereich die Wandstärke des metallischen Rohres, d. h. des metallischen Überlappens, das 0,01-fache bis 0,5-fache der gesamten Wandstärke, bevorzugt das 0,03-fache bis 0,3-fache der gesamten Wandstärke, insbesondere da 0,05-fache bis 0,1-fache der gesamten Wandstärke.

Vorteilhaft ist im zweiten Rohrbereich die Wandstärke des keramischen Überlappes, das 0,1-fache bis 0,95-fache der gesamten Wandstärke, bevorzugt das 0,5-fache bis 0,95-fache der gesamten Wandstärke, insbesondere das 0,8-fache bis 0,95-fache der gesamten Wandstärke. Vorteilhaft ist im zweiten Rohrbereich die Wandstärke der Hülse, das 0,05-fache bis 0,9-fache der gesamten Wandstärke, bevorzugt das 0,05-fache bis 0,5-fache der gesamten Wandstärke, insbesondere das 0,05-fache bis 0,2-fache der gesamten Wandstärke.

Die Dicke der Lage aus monolithischer Keramik beträgt vorteilhaft von 0,5 mm bis 45 mm, bevorzugt von 1 mm bis 25 mm, besonders bevorzugt von 3 mm bis 15 mm. Die Dicke der Lage aus oxidischer Faserverbundkeramik beträgt vorteilhaft von 0,5 mm bis 5 mm, bevorzugt von 0,5 mm bis 3 mm.

Vorteilhaft umfasst die vorliegende Erfindung ein Verbindungsstück, das einen ersten Rohr-Bereich beinhaltend ein metallisches Rohr, z. B. mindestens eine metallische gasführende Leitung, aufweist, das einen zweiten an den ersten Rohr-Bereich anschließenden Rohr-Bereich aufweist, der eine Sandwichstruktur beinhaltend eine innere Keramik-Lage, eine mittlere metallische Lage und eine äußere Keramik-Lage, wobei eine der Keramik-Lagen eine nicht offen poröse monolithische Keramik-Lage und die andere Keramik-Lage eine Faserverbundkeramik-Lage aufweist und einen dritten an den zweiten Rohr-Bereich anschließenden Rohr-Bereich aufweist, der ein mehrlagiges Verbundrohr beinhaltend mindestens zwei Lagen, eine Lage aus nicht offen poröser monolithischer Keramik und eine Lage aus Faserverbundkeramik, aufweist.

Vorteilhaft ist die Faserverbundkeramik die innere keramische Lage. Vorteilhaft ist die nicht offen poröse monolithische Keramik-Lage die äußere Lage. Alternativ ist die Faserverbundkeramik die äußere keramische Lage. Alternativ ist die nicht offen poröse monolithische Keramik-Lage die innere Lage. Bevorzugt ist die Faserverbundkeramik oxidisch. Bevorzugt ist die nicht offen poröse monolithische Keramik eine Oxid-Keramik.

Die Länge des zweiten Rohrbereichs beträgt vom 0,05-fachen bis zum 10-fachen, bevorzugt von 0,1-fachen bis zum 5-fachen, insbesondere von 0,2-fachen bis zum 2-fachen des Innendurchmessers des mehrlagigen Verbundrohres.

Vorteilhaft ist im zweiten Rohrbereich die Wandstärke des metallischen Rohres, d.h. des metallischen Überlappes, das 0,01-fache bis 0,5-fache der gesamten Wandstärke, bevorzugt das 0,03-fache bis 0,3-fache der gesamten Wandstärke, insbesondere das 0,05-fache bis 0,1-fache der gesamten Wandstärke.

Vorteilhaft ist im zweiten Rohrbereich die Wandstärke des keramischen Überlappes, das 0,1-fache bis 0,95-fache der gesamten Wandstärke, bevorzugt das 0,5-fache bis 0,95-fache der gesamten Wandstärke, insbesondere das 0,8-fache bis 0,95-fache der gesamten Wandstärke. Vorteilhaft ist im zweiten Rohrbereich die Wandstärke der Hülse, das 0,05-fache bis 0,9-fache der gesamten Wandstärke, bevorzugt das 0,05-fache bis 0,5-fache der gesamten Wandstärke, insbesondere das 0,05-fache bis 0,2-fache der gesamten Wandstärke.

Die Dicke der Lage aus monolithischer Keramik beträgt vorteilhaft von 0,5 mm bis 45 mm, bevorzugt von 1 mm bis 25 mm, besonders bevorzugt von 3 mm bis 15 mm. Die Dicke der Lage aus oxidischer Faserverbundkeramik beträgt vorteilhaft von 0,5 mm bis 5 mm, bevorzugt von 0,5 mm bis 3 mm.

Vorteilhaft umfasst die vorliegende Erfindung ein Verbindungsstück, das einen ersten Rohr-Bereich beinhaltend ein metallisches Rohr, z. B. mindestens eine metallische gasführende Leitung, aufweist, das einen zweiten an den ersten Rohr-Bereich anschließenden Rohr-Bereich aufweist, der eine Sandwichstruktur beinhaltend eine innere und eine mittlere Keramik-Lage und eine äußere metallische Lage, wobei eine der Keramik-Lagen eine nicht offen poröse monolithische Keramik-Lage und die andere Keramik-Lage eine Faserverbundkeramik-Lage aufweist und einen dritten an den zweiten Rohr-Bereich anschließenden Rohr-Bereich aufweist, der ein mehrlagiges Verbundrohr beinhaltend mindestens zwei Lagen, eine Lage aus nicht offen poröser monolithischer Keramik und eine Lage aus Faserverbundkeramik, aufweist.

Vorteilhaft ist die Faserverbundkeramik die innere keramische Lage. Vorteilhaft ist die nicht offen poröse monolithische Keramik-Lage die äußere Lage. Alternativ ist die Faserverbundkeramik die äußere keramische Lage. Alternativ ist die nicht offen poröse monolithische Keramik-Lage die innere Lage. Bevorzugt ist die Faserverbundkeramik oxidisch. Bevorzugt ist die nicht offen poröse monolithische Keramik eine Oxid-Keramik.

Die Länge des zweiten Rohrbereichs beträgt vom 0,05-fachen bis zum 10-fachen, bevorzugt von 0,1-fachen bis zum 5-fachen, insbesondere von 0,2-fachen bis zum 2-fachen des Innendurchmessers des mehrlagigen Verbundrohres.

Vorteilhaft ist im zweiten Rohrbereich die Wandstärke des metallischen Rohres, d.h. des metallischen Überlappes, das 0,01-fache bis 0,5-fache der gesamten Wandstärke, bevorzugt das 0,03-fache bis 0,3-fache der gesamten Wandstärke, insbesondere da 0,05-fache bis 0,1-fache der gesamten Wandstärke.

Vorteilhaft ist im zweiten Rohrbereich die Wandstärke des keramischen Überlappes, das 0,1-fache bis 0,95-fache der gesamten Wandstärke, bevorzugt das 0,5-fache bis 0,95-fache der gesamten Wandstärke, insbesondere da 0,8-fache bis 0,95-fache der gesamten Wandstärke. Vorteilhaft ist im zweiten Rohrbereich die Wandstärke der Hülse, das 0,05-fache bis 0,9-fache der gesamten Wandstärke, bevorzugt das 0,05-fache bis 0,5-fache der gesamten Wandstärke, insbesondere das 0,05-fache bis 0,2-fache der gesamten Wandstärke.

Die Dicke der Lage aus monolithischer Keramik beträgt vorteilhaft von 0,5 mm bis 45 mm, bevorzugt von 1 mm bis 25 mm, besonders bevorzugt von 2 mm bis 15 mm. Die Dicke der Lage aus oxidischer Faserverbundkeramik beträgt vorteilhaft von 0,5 mm bis 5 mm, bevorzugt von 0,5 mm bis 3 mm.

Das mehrlagige Verbundrohr ist typischerweise vertikal angeordnet, an einem Ende fest und am anderen Ende lose gelagert. Vorzugsweise ist es am unteren Ende fest eingespannt und am oberen Ende in axialer Richtung verschiebbar geführt. In dieser Anordnung kann sich das Rohr spannungsfrei thermisch ausdehnen.

Eine Variante der Lösung besteht aus zwei konzentrischen Rohren. Das innere Rohr weist vorteilhaft einen Rohrinnendurchmesser von 10 mm bis 100 mm, bevorzugt 15 mm bis 50 mm, insbesondere 20 mm bis 30 mm, auf. Das innere Rohr ist vorteilhaft auf beiden Seiten offen und das äußere Rohr vorteilhaft einseitig verschlossen. Das äußere Rohr weist vorteilhaft einen Rohrinnendurchmesser von 20 mm bis 1000 mm, bevorzugt 50 mm bis 800 mm, insbesondere 100 mm bis 500 mm, auf. Am offenen Randbereich sind die Wände des inneren und des äußeren Rohres vorteilhaft versiegelt. Die Hauptreaktionsstrecke befindet sich vorteilhaft im Ringraum zwischen dem Innen- und dem Außenrohr. Dabei können die Reaktanden entweder in den Ringraum eingeleitet und der Produktstrom aus dem Innenrohr abgezogen werden oder umgekehrt. Die Anschlüsse für den Zulauf und den Ablauf befinden sich am offenen Rohrende. Das geschlossene Rohrende kann lose (ohne jede Führung) in den Heizraum ragen und dort ungehindert expandieren. Dadurch können in axialer Richtung keine temperaturinduzierte Spannungen entstehen. Durch diese Konfiguration wird gewährleistet, dass die mehrlagigen Verbundrohre nur einseitig, im Kalten eingespannt und abgedichtet werden müssen und am geschlossenen Ende ungehindert die thermische Ausdehnung eingehen können.

Eine Variante der erfindungsgemäßen Lösung besteht aus einem mäanderförmigen Rohr, wobei die Anzahl der Mäanderschenkeln bevorzugt gerade ist, so dass die Rohrenden sich auf derselben Seite des Mäanders befinden. Eine weitere Variante ist zusammengesetzt aus mehreren Rohrleitungen, die zu zweit oder zu mehreren zusammengeführt werden.

Die vorliegende Erfindung umfasst somit einen Doppelrohr-Reaktor für endotherme Reaktionen, der dadurch gekennzeichnet ist, dass der Reaktor zwei mehrlagige Verbundrohre mit einem Wärmedurchgangskoeffizient von > 500 $W/m^2/K$ beinhaltend mindestens jeweils zwei Lagen, eine Lage aus nicht offen poröser monolithischer Keramik und eine Lage aus Faserverbundkeramik aufweist, wobei das eine Verbundrohr das andere Verbundrohr umschließt und das innere Verbundrohr auf beiden Seiten offen ist und das äußere Rohr einseitig verschlossen ist.

Vorteilhaft ist die Faserverbundkeramik die äußere keramische Lage des mehrlagigen Verbundrohres beinhaltend zwei konzentrischen Rohre. Vorteilhaft ist die nicht offen poröse monolithische Keramik-Lage die innere Lage. Alternativ ist die Faserverbundkeramik die innere keramische Lage. Alternativ ist die nicht offen poröse monolithische Keramik-Lage die äußere Lage. Bevorzugt ist die Faserverbundkeramik oxidisch. Bevorzugt ist die nicht offen poröse monolithische Keramik eine Oxid-Keramik.

Durch den doppellagigen Aufbau kann die Dichtigkeit und Temperaturbeständigkeit eines Rohres aus monolithischer nicht offen poröser Keramik mit dem gutmütigen Versagensverhalten der Faserverbundkeramik ("Riss vor Bruch") kombiniert werden. Die erfindungsgemäße Vorrichtung mit versiegelten Randbereichen ermöglicht die gasdichte Anbindung der mehrlagigen Verbundrohre an die konventionell ausgeführte Peripherie.

Vorteilhaft werden die erfindungsgemäßen keramischen mehrlagigen Verbundrohre für folgende Prozesse eingesetzt:

- Herstellung von Synthesegas durch Reformierung von Kohlenwasserstoffen mit Wasserdampf und / oder $CO_2$.
- Herstellung von Blausäure aus Methan und Ammoniak (Degussa) oder aus Propan und Ammoniak.
- Koppelproduktion von Wasserstoff, Olefinen, Diolefinen, Acetylene, Aromaten durch Wasserdampfspaltung von Kohlenwasserstoffen (Naphtha, Ethan, Propan).
- Koppelproduktion von Wasserstoff, Olefinen, Diolefinen, Acetylene, Aromaten und Pyrolyse-Kohlenstoff durch die Pyrolyse von Kohlenwasserstoffen.
- Kupplung von Methan zu Ethylen, Acetylen und zu Benzol.
- Reverse Wassergasschift-Reaktion zur Herstellung von Synthesegas aus Wasserstoff und

Kohlenstoffdioxid.

- Dehydrierung von Propan zu Propen, Butan zu Buten, Ethylbenzol zu Styrol.
- Dehydrierung von Alkoholen zu Aldehyden, speziell Methanol zu Formaldehyd.

Vorteilhaft werden die erfindungsgemäßen *keramischen* Verbundrohre als Reaktionsrohre in folgenden Anwendungen eingesetzt:

- Reaktoren mit axialer Temperaturkontrolle, wie

  ◦ Wirbelschichtreaktoren,
  ◦ Rohrbündelreaktoren,
  ◦ Reformer- und Spaltrohre.

- Strahlrohre.
- Gegenstromreaktoren.
- Membranreaktoren.
- Drehrohre für Drehrohröfen.

Im Folgenden werden die Vorteile des erfindungsgemäßen mehrlagigen Verbundrohres durch Vergleichsbeispiele belegt.

Beispiel 1: Gegenbeispiel gemäß dem Stand der Technik

Ein elektrisch beheiztes vollmetallisches Spaltrohr.

Werkstoff: 1.4852 Micro
Außendurchmesser: 73mm
Innendurchmesser: 62mm
Länge: 33m

Das Rohr ist mäanderförmig und besteht aus sechs Ästen. Jeder Ast hat eine Länge 5,5 m. Auf der einen Seite werden zwei Äste an jeweils einer Phase einer Wechselstromquelle kontaktiert. Auf der anderen Seite sind alle Äste mit einem Nullleiter verbunden (Sternschaltung). Der elektrische Widerstand eines jeden Astes beträgt 2,3 m$\Omega$. In jedem Ast muss eine thermische Leistung von ca. 85 kW durch Widerstandsleistung erzeugt werden. Dabei erreicht das Spaltrohr eine Wandtemperatur bis 1000°C. Um die erforderliche elektrische Leistung zu erzeugen, ist in jedem Ast ein elektrischer Strom von 6 kA erforderlich. Der Spannungsabfall entlang eines Astes beträgt 14,2 Volt. Diese Konfiguration hat zwei gravierende Nachteile:

1. Die Einleitung des elektrischen Stroms in den Apparat erfordert Leitungen mit einem großen Querschnitt. Eine Kupferleitung mit einem Durchmesser von 80 mm wäre erforderlich, um den elektrischen Strom zu leiten ohne zu überhitzen. Als sichere Grenze gilt eine Überhitzung der Oberfläche der Leitung gegenüber der Umgebung < 33K. 2. Der Übergang von der Einspeisungsleitung zum Spaltrohr muss mit einem extrem geringen Kontaktwiderstand erreicht werden. Der Kontaktwiderstand sollte weniger als 10 $\mu\Omega$ betragen, um eine Überhitzung der Kontaktstelle zu verhindern. Dieser niedrige Wert des Übergangswiderstandes ist mit den üblichen Klemmverbindungen nicht erreichbar. Andererseits bedingt eine stoffschlüssige Verbindung einen Materialübergang im Heißen, wodurch Kontaktkorrosion verursacht werden kann. Desweiteren ist auf dem Niveau der Betriebstemperatur der Spaltrohre die Beständigkeitsgrenze von Kupfer erreicht.

Insgesamt ist der Stand der Technik ungeeignet für die Realisierung eines elektrisch beheizten Spaltrohres.

Beispiel 2: Erfindungsgemäßes Beispiel.

Ein elektrisch beheiztes hybrides Spaltrohr. Die Wand des Spaltrohres besteht aus mehreren Lagen:

| Lage | Werkstoff | Außendurchmesser in mm | Wandstärke in mm |
| --- | --- | --- | --- |
| Innenrohr | Korund (Alsint 99,7) | 66 | 2 |

(fortgesetzt)

| Lage | Werkstoff | Außendurchmesser in mm | Wandstärke in mm |
|---|---|---|---|
| Metallhülse | INCONEL 600 (2.4816) | 66,2 | 0,1 |
| OCMC-Korsett | WPS FW-12 | 69 | 1,4 |
| Länge: 33m | | | |

Das Rohr besteht aus sechs Ästen. Jeder Ast hat eine Länge 5,5 m. Auf der einen Seite werden zwei Äste an jeweils einer Phase einer Wechselstromquelle kontaktiert. Auf der anderen Seite sind alle Äste mit einem Nullleiter verbunden (Sternschaltung). Der elektrische Widerstand eines jeden Astes beträgt 132 mΩ. In jedem Ast muss eine thermische Leistung von ca. 85 kW durch Widerstandsleistung erzeugt werden. Dabei erreicht das Spaltrohr eine Wandtemperatur bis 1000°C. Um die erforderliche elektrische Leistung zu erzeugen, ist in jedem Ast ein elektrischer Strom von 800 A erforderlich. Der Spannungsabfall entlang eines Astes beträgt 100 Volt. Die Einleitung des elektrischen Stroms in den Apparat kann über eine Kupferleitung mit einem Durchmesser von 20 mm bewerkstelligt werden. Die Kupferleitung wird im Kalten mit einen zylindrischen Block aus 2.4816 verbunden, wobei dieser Block einen Durchmesser von 65 mm aufweist. Am Hybridrohr trägt die Metallhülse einen Stutzen, der mit der elektrischen Versorgungsleitung verbunden wird. Die Verbindung geschieht über einen Kragen an der Metallhülse, der über der OCMC-Armierung hervorsteht und ausreichende Kontaktfläche anbietet, um einen Kontaktwiderstand < 0,1 mΩ zu gewährleisten. Dadurch wird eine Überhitzung der Kontaktstelle wirksam verhindert.

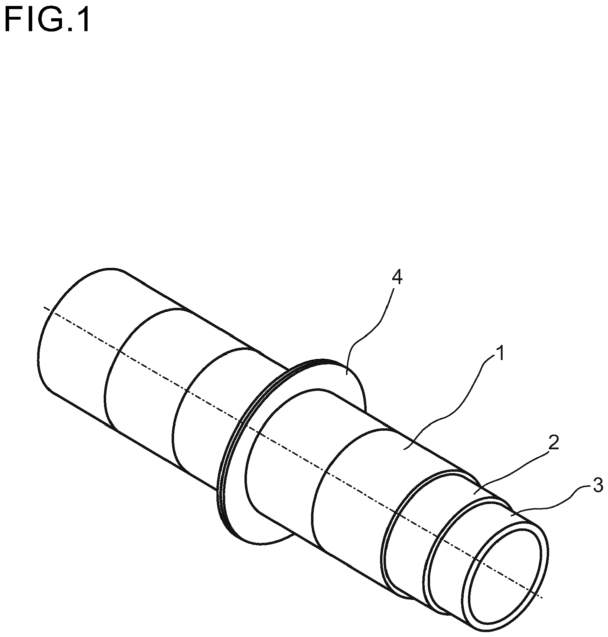

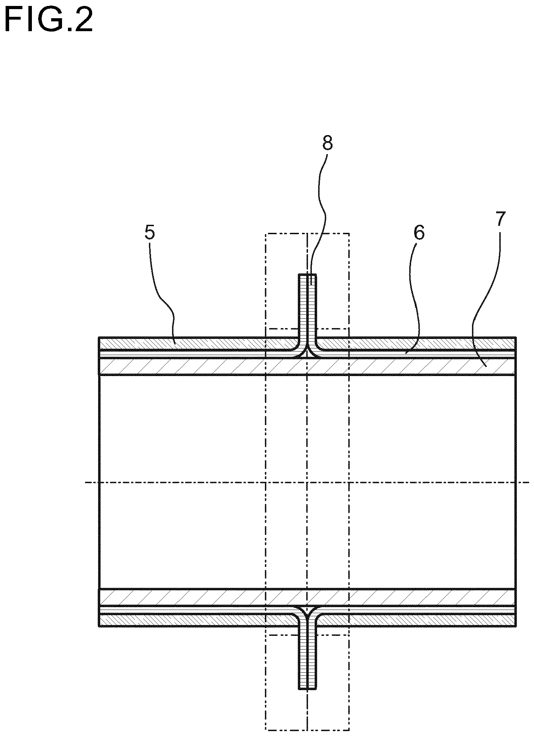

Die Figuren 1 und 2 zeigen exemplarisch eine bevorzugte Ausgestaltung des erfindungsgemä-ßen mehrschichtigen Verbundrohres.

In Figur 1 ist eine perspektivische Darstellung eines elektrisch beheizten Verbundrohres mit einer integrierten Vorrichtung für eine elektrische Kontaktierung zu sehen. Es ist die äußere Lage aus oxidischer Faserverbundkeramik (1) zu sehen. Unterhalb der inneren Oberfläche dieser Lage (1) ist eine Metallhülse (2) angeordnet. Das Innere des erfindungsgemäßen Verbundrohres wird von einer nicht offen porösen monolithischen Oxid-Keramik (3) gebildet. Weiterhin ist ein nach außen gerichteter Kragen an der Metallhülse (4) dargestellt, der eine elektrische Kontaktierung ermöglicht.

In Figur 2 ist eine Schnittzeichnung einer bevorzugten Ausgestaltung des erfindungsgemäßen Verbundrohres zu sehen. Es wird die die äußere Lage aus oxidischer Faserverbundkeramik (5) dargestellt, unterhalb derer sich eine Metallhülse (6) befindet.. Das Innere des erfindungsgemäßen Verbundrohres wird von einer nicht offen porösen monolithischen Oxid-Keramik (7) gebildet. Weiterhin ist ein nach außen gerichteter Kragen an der Metallhülse (8) dargestellt, der eine elektrische Kontaktierung ermöglicht.

**Patentansprüche**

1. Mehrlagiges Verbundrohr mit einem Wärmedurchgangskoeffizient von > 500 W/m$^2$/K beinhaltend mindestens zwei Lagen, welches in seinem Aufbau über den Querschnitt der Wand des Verbundrohres als innere Lage (3, 7) eine nicht offen poröse monolithische Oxid-Keramik aufweist, welche von einer äußeren Lage (1, 5) aus oxidischer Faserverbundkeramik umschlossen wird, wobei diese äußere Lage eine offene Porosität ε von 5 % < ε < 50 %, bevorzugt 10 < ε < 30 %, aufweist, wobei in dem äußeren Ringraum des mehrlagigen Verbundrohres, dessen Begrenzungen definiert sind durch einerseits die äußere Mantelfläche der inneren Lage, die aus der nicht offenen porösen monolithischen Oxid-Keramik gebildet wird und andererseits durch die äußere Mantelfläche der äußeren Lage, die aus einer oxidischen Faserverbundkeramik gebildet wird, **dadurch gekennzeichnet, dass** ein elektrisch leitfähiges System (2, 6) integriert ist.

2. Verbundrohr nach Anspruch 1, **dadurch gekennzeichnet, dass** die Temperaturwechselbeständigkeit im Sinne von DIN EN 993-11 des Verbundrohres größer als 50 K/h ist.

3. Verbundrohr nach mindestens einem der Ansprüche 1 bis 2, **dadurch gekennzeichnet, dass** in die äußere Lage des mehrlagigen Verbundrohres elektrisch leitfähige Fäden integriert sind.

4. Verbundrohr nach mindestens einem der Ansprüche 1 bis 3, **dadurch gekennzeichnet, dass** die elektrische Leitfähigkeit in dem äußeren Ringraum des mehrlagigen Verbundrohres eine spezifische Leitfähigkeit von 1 kS/m bis 100 MS/m aufweist.

5. Verbundrohr nach mindestens einem der Ansprüche 1 bis 4, **dadurch gekennzeichnet, dass** zwischen der inneren Lage des Verbundrohres und der äußeren Lage des Verbundrohres Segmente aus elektrisch leitfähigem Material eingebracht sind.

6. Verbundrohr nach mindestens einem der Ansprüche 1 bis 5, **dadurch gekennzeichnet, dass** die innere Oberfläche des Verbundrohres zu 10% bis 95% bezogen auf die gesamte innere Oberfläche des Verbundrohres mit Vertiefungen versehen ist, welche an der inneren Oberfläche des Verbundrohres zur Außenwand des Verbundrohres gerichtet sind

7. Verbundrohr nach mindestens einem der Ansprüche 1 bis 6, **dadurch gekennzeichnet, dass** die gesamte Wandstärke des Verbundrohres 0,5 mm bis 50 mm beträgt.

8. Verbundrohr nach mindestens einem der Ansprüche 1 bis 7, **dadurch gekennzeichnet, dass** der Rohrinnendurchmesser des Verbundrohres 10 mm bis 1000 mm beträgt.

9. Verbundrohr nach mindestens einem der Ansprüche 1 bis 8, **dadurch gekennzeichnet, dass** als oxidische Faserverbundkeramik $SiC/Al_2O_3$, SiC/Mullit, $C/Al_2O_3$, C/Mullit, $Al_2O_3/Al_2O_3$, $Al_2O_3$/Mullit, Mullit/$Al_2O_3$, Mullit/Mullit, $Al_2O_3$/ZAT, Mullit/ZAT und/oder ZAT/ZAT eingesetzt wird.

10. Verbundrohr nach mindestens einem der Ansprüche 1 bis 9, **dadurch gekennzeichnet, dass** das Verbundrohr zwei Lagen, eine innere und eine äußere Lage beinhaltet, wobei die innere Lage aus nicht offen poröser monolithischer Oxidkeramik aufgebaut ist und die äußere Lage aus oxidischer Faserverbundkeramik aufgebaut ist.

11. Verbundrohr nach mindestens einem der Ansprüche 1 bis 10, **dadurch gekennzeichnet, dass** die innere Lage eine Mindestschichtdicke von 0,5 mm bis 45 mm aufweist.

12. Verwendung des Verbundrohres nach mindestens einem der Ansprüche 1 bis 11 bei der Herstellung von Synthesegas durch Reformierung von Kohlenwasserstoffen mit Wasserdampf und / oder Kohlenstoffdioxid, Koppelproduktion von Wasserstoff und Pyrolyse-Kohlenstoff durch die Pyrolyse von Kohlenwasserstoffen, Herstellung von Blausäure aus Methan und Ammoniak oder aus Propan und Ammoniak, Herstellung von Olefinen durch Wasserdampfspaltung von Kohlenwasserstoffen und/oder Kupplung von Methan zu Ethylen, Acetylen und zu Benzol.

13. Verwendung des Verbundrohres nach mindestens einem der Ansprüche 1 bis 11 als Reaktionsrohre in Reaktoren mit axialer Temperaturkontrolle, Gegenstromreaktoren, Membranreaktoren, Strahlrohre und/oder Drehrohre für Drehrohröfen.

14. Verfahren zur Herstellung des mehrlagigen Verbundrohres gemäß Anspruch 1, **dadurch gekennzeichnet, dass** man ein monolithisches Rohr aus gesinterter Oxid-Keramik mit nicht offener Porosität mit einer Folie aus einer Metalllegierung umwickelt, anschließend mit einem Gewebe aus oxidkeramischen Fasern umwickelt und mit einem Schlicker infiltriert, der oxidkeramische Partikel enthält und anschließend das Verbundrohr in einem Trockenofen trocknet und schließlich in einem Hochtemperaturofen gebrannt wird.

**Claims**

1. A multilayered composite tube having a heat transfer coefficient of > 500 $W/m^2/K$ comprising at least two layers which in its construction over the cross section of the wall of the composite tube comprises as an inner layer (3, 7) a zero-open-porosity monolithic oxide ceramic surrounded by an outer layer (1, 5) of oxidic fiber composite ceramic, wherein this outer layer has an open porosity $\varepsilon$ of 5% < $\varepsilon$ < 50 %, preferably 10% < $\varepsilon$ < 30 %, wherein in the outer annular space of the multilayered composite tube whose confines are defined on the one hand by the outer lateral surface of the inner layer formed from the zero-open-porosity monolithic oxide ceramic and on the other hand by the outer lateral surface of the outer layer formed from an oxidic fiber composite ceramic, wherein an electrically conductive system (2, 6) is integrated.

2. The composite tube according to claim 1, wherein the thermal shock resistance according to DIN EN 993-11 of the composite tube is greater than 50 K/h.

3. The composite tube according to at least one of claims 1 to 2, wherein electrically conductive threads are integrated into the outer layer of the multilayered composite tube.

4. The composite tube according to at least one of claims 1 to 3, wherein the electrical conductivity in the outer annular space of the multilayered composite tube has a specific conductivity of 1 kS/m to 100 MS/m.

5. The composite tube according to at least one of claims 1 to 4, wherein segments of electrically conductive material are incorporated between the inner layer of the composite tube and the outer layer of the composite tube.

6. The composite tube according to at least one of claims 1 to 5, wherein the inner surface of the composite tube is provided to an extent of 10% to 95% based on the total inner surface of the composite tube with depressions on the inner surface of the composite tube which are oriented towards the outer wall of the composite tube.

7. The composite tube according to at least one of claims 1 to 6, wherein the total wall thickness of the composite tube is 0.5 mm to 50 mm.

8. The composite tube according to at least one of claims 1 to 7, wherein the tube internal diameter of the composite tube is 10 mm to 1000 mm.

9. The composite tube according to at least one of claims 1 to 8, wherein the employed oxidic fiber composite ceramic is $SiC/Al_2O_3$, SiC/mullite, $C/Al_2O_3$, C/mullite, $Al_2O_3/Al_2O_3$, $Al_2O_3$/mullite, mullite/$Al_2O_3$, mullite/mullite, $Al_2O_3$/ZAT, mullite/ZAT and/or ZAT/ZAT.

10. The composite tube according to at least one of claims 1 to 9, wherein the composite tube contains two layers, namely an inner layer and an outer layer, wherein the inner layer is constructed from zero-open-porosity monolithic oxide ceramic and the outer layer is constructed from oxidic fiber composite ceramic.

11. The composite tube according to at least one of claims 1 to 10, wherein the inner layer has a minimum layer thickness of 0.5 mm to 45 mm.

12. The use of the composite tube according to at least one of claims 1 to 11 in the production of synthesis gas by reforming of hydrocarbons with steam and/or carbon dioxide, coproduction of hydrogen and pyrolysis carbon by pyrolysis of hydrocarbons, production of hydrocyanic acid from methane and ammonia or from propane and ammonia, production of olefins by steamcracking of hydrocarbons and/or coupling of methane to give ethylene, acetylene and benzene.

13. The use of the composite tube according to at least one of claims 1 to 11 as reaction tubes in reactors with axial temperature control, countercurrent reactors, membrane reactors, jet tubes and/or rotary tubes for rotary tube furnaces.

14. A process for producing the multilayered composite tube according to claim 1, wherein a monolithic tube made of sintered oxide ceramic having zero-open-porosity is wrapped with a foil made of a metal alloy, subsequently wrapped with a fabric made of oxide-ceramic fibers and infiltrated with a slip comprising oxide ceramic particles and the composite tube is subsequently dried in a drying oven and finally fired in a high-temperature furnace.

**Revendications**

1. Tube composite multicouche ayant un coefficient de transfert thermique > 500 W/m$^2$/K, contenant au moins deux couches, qui dans sa structure présente sur la section transversale de la paroi du tube composite, en tant que couche intérieure (3, 7), une céramique monolithique poreuse non ouverte à base d'oxyde, qui est entourée par une couche extérieure (1, 5) en une céramique composite à base d'oxyde renforcée par des fibres, dans lequel cette couche extérieure présente une porosité ouverte ε de 5 % < ε < 50 %, de préférence 10 < ε < 30 %, la céramique composite à base d'oxyde renforcée par des fibres étant formée dans l'espace annulaire extérieur du tube composite multicouche, dont les limites sont définies d'une part par la surface latérale extérieure de la couche intérieure, qui est formée de la céramique monolithique poreuse non ouverte à base d'oxyde, d'autre part par la surface latérale extérieure de la couche extérieure, **caractérisé en ce qu'**un système conducteur de l'électricité (2, 6) est intégré.

2. Tube composite selon la revendication 1, **caractérisé en ce que** la résistance au choc thermique au sens de DIN EN 993-11 du tube composite est supérieure à 50 K/h.

**3.** Tube composite selon au moins l'une des revendications 1 à 2, **caractérisé en ce que** des fils conducteurs de l'électricité sont intégrés dans la couche extérieure du tube composite multicouche.

**4.** Tube composite selon au moins l'une des revendications 1 à 3, **caractérisé en ce que** la conductivité électrique dans l'espace annulaire extérieur du tube composite multicouche présente une conductivité spécifique de 1 kS/m à 100 MS/m.

**5.** Tube composite selon au moins l'une des revendications 1 à 4, **caractérisé en ce que** des segments en un matériau conducteur de l'électricité sont introduits entre la couche intérieure du tube composite et la couche extérieure du tube composite.

**6.** Tube composite selon au moins l'une des revendications 1 à 5, **caractérisé en ce que** la surface intérieure du tube composite est, à raison de 10 % à 95 %, par rapport à la surface intérieure totale du tube composite, pourvue de renfoncements, qui sur la surface intérieure du tube composite sont dirigés vers la surface extérieure du tube composite.

**7.** Tube composite selon au moins l'une des revendications 1 à 6, **caractérisé en ce que** l'épaisseur de paroi totale du tube composite est de 0,5 mm à 50 mm.

**8.** Tube composite selon au moins l'une des revendications 1 à 7, **caractérisé en ce que** le diamètre intérieur du tube composite est de 10 mm à 1 000 mm.

**9.** Tube composite selon au moins l'une des revendications 1 à 8, **caractérisé en ce qu'**on utilise comme céramique composite à base d'oxyde renforcée par des fibres $SiC/Al_2O_3$, SiC/mullite, $C/Al_2O_3$, C/mullite, $Al_2O_3/Al_2O_3$, $Al_2O_3$/mullite, mullite/$Al_2O_3$, mullite/mullite, $Al_2O_3$/ZAT, mullite/ZAT et/ou ZAT/ZAT.

**10.** Tube composite selon au moins l'une des revendications 1 à 9, **caractérisé en ce que** le tube composite contient deux couches, une couche intérieure et une couche extérieure, la couche intérieure étant constituée d'une céramique monolithique poreuse non ouverte à base d'oxyde et la couche extérieure étant constituée d'une céramique composite à base d'oxyde renforcée par des fibres.

**11.** Tube composite selon au moins l'une des revendications 1 à 10, **caractérisé en ce que** la couche intérieure présente une épaisseur minimale de couche de 0,5 mm à 45 mm.

**12.** Utilisation du tube composite selon au moins l'une des revendications 1 à 11 pour la fabrication de gaz de synthèse par reformage d'hydrocarbures à la vapeur et/ou au dioxyde de carbone, la production couplée d'hydrogène et de carbone de pyrolyse par pyrolyse d'hydrocarbures, la fabrication d'acide prussique à partir de méthane et d'ammoniac ou de propane et d'ammoniac, la fabrication d'oléfines par dissociation d'hydrocarbures à la vapeur d'eau et/ou couplage de méthane en éthylène, acétylène et benzène.

**13.** Utilisation du tube composite selon au moins l'une des revendications 1 à 11 comme tubes de réaction dans des réacteurs à régulation axiale de la température, dans des réacteurs à contre-courant, des réacteurs à membrane, des tubes de faisceau et/ou des tubes pour four tubulaire rotatif.

**14.** Procédé de fabrication du tube composite multicouche selon la revendication 1, **caractérisé en ce qu'**on entoure un tube monolithique en céramique à base d'oxyde frittée, ayant une porosité non ouverte, d'une feuille en un alliage métallique, puis on l'entoure d'un tissu en fibres céramiques à base d'oxyde et on y infiltre une barbotine qui contient des particules céramiques à base d'oxyde, puis on sèche le tube composite dans un four de séchage, et finalement, on le cuit dans un four à haute température.

FIG.1

# FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016007652 A1
- WO 2016184776 A1
- DE 10011309 A1
- EP 1882518 B1
- EP 1961702 A1
- EP 1328344 A1
- EP 1972853 B1
- WO 2004091773 A1
- EP 684071 A2
- GB 1238468 A
- DE 3533385 C1
- DE 4306896 A1

**In der Beschreibung aufgeführte Nicht-Patentliteratur**

- Catalytic fixed-bed reactors. **EIGENBERGER, G. ; RUPPEL, W.** ullmann's encyclopedia of industrial chemistry. Wiley, 2000
- **SHORT, D. ; SUMMERSCALES, J.** Hybrids-a review: Part 1. Techniques, design and construction. *Composites,* 1979, vol. 10 (4), 215-222
- **KIM, SUNG-WNG et al.** Electron carrier generation in a refractory oxide 12CaO.7Al2O3 by heating in reducing atmosphere: Conversion from an insulator to a persistent conductor. *Journal of the American Ceramic Society,* 2006, vol. 89.10, 3294-3298
- Informationszentrum Technische Keramik (IZTK): Brevier technische Keramik. Fahner Verlag, 2003
- **DARKEN, L. S. ; GURRY, R. W.** Physical chemistry of metals. McGraw-Hill, 1953
- Wärmedurchgang. VDI-Wärmeatlas. 1997
- **SCHMÜCKER, M.** Faserverstärkte oxidkeramische Werkstoffe. *Materialwissenschaft und Werkstofftechnik,* 2007, vol. 38 (9), 698-704
- Nextel™ Ceramic Textiles Technical Notebook. 2004, vol. 3M